# EUROPÄISCHE PATENTSCHRIFT

(11) **EP 0 320 627 B1**
(45) Veröffentlichungstag und Bekanntmachung des Hinweises auf die Patenterteilung: **24.02.1993**
(21) Anmeldenummer: 88118881.7
(22) Anmeldetag: 11.11.1988
(51) Int. Cl.: H04Q 11/04, H04Q 3/545

(54) **Verfahren zur Umschaltung einer Anschlussgruppe auf eine Partneranschlussgruppe in Fernmeldevermittlungsanlagen**
Method for switching a line card to an associated line card in telecommunication exchanges
Procédé de commutation d'un groupe de raccordement sur un groupe de raccordement associé dans des centraux de télécommunication

(30) Priorität: 16.12.1987 DE 3742687
(43) Veröffentlichungstag der Anmeldung: 21.06.1989
(73) Patentinhaber: SIEMENS AKTIENGESELLSCHAFT, 80333 München (DE)
(72) Erfinder: Nagler, Werner, Dipl.-Ing., D-8021 Hohenschäftlarn (DE); Schönauer, Ludwig, Dr. rer. nat., D-8029 Sauerlach (DE)

(56) Entgegenhaltungen:
- EP-A- 0 039 077
- FR-A- 2 180 171
- LU-A- 86 734
- NACHRICHTENTECHNISCHE ZEITSCHRIFT, Band 38, Nr. 10, Oktober 1985, Seiten 708-710,712, Berlin, DE; F.C. KUZNIK: "Vermittlungssystem 5ESS-PRX für den öffentlichen Fernsprechverkehr"

## Beschreibung

Durch die Zeitschrift "telcom report", vierter Jahrgang (1981), Beiheft "Digitalvermittlungssysstem EWSD", insbesondere durch den auf Seite 19 beginnenden Artikel, sind bereits PCM-Fernsprechvermittlungsanlagen bekannt, die mit einem mehrstufigen, Zeitmultiplex-Eingänge und Zeitmultiplex-Ausgänge aufweisenden zentralen Prozessor, sowie mit einer Mehrzahl von einem Anschluß von Zeitmultiplex-Verbindungsleitungen dinenden Anschlußgruppen ausgestattet sind, von denen je an einen Zeitmultiplex-Eingang und einen Zeitmultiplex-Ausgang des Koppelfeldes angeschlossen ist, udn von denen jede an eine Mehrzahl von dem Anschluß jeweils einer Zeitmultiplex-Verbindungsleitung dienenden Anschlußeinheiten aufweist, die ihrerseits mit einer zu der betreffenden Anschlußgruppe gehörenden Zeitmultiplex-Koppeleinrichtung verbunden und über diese mit Kanälen des der jeweiligen Anschlußgruppe entsprechenden Zeitmultiplex-Einganges und des entsprechenden Zeitmultiplex-Ausganges des Koppelfeldes verbindbar ist.

In Fernsprechvermittlungsanlagen dieser Art fassen Zeitmultiplex-Verbindungsleitungen immer eine größere Anzahl von zum Beispiel vierundzwanzig, dreißig, sechzig oder noch mehr Kanalpaaren zusamnmen. Ein Kanalpaar umfaßt immer einen Kanal in der einene Übertragungsrichtung und einen Kanal in der anderen Übertragungsrichtung. Ein Kanalpaar ist pro Verbindung erforderlich (abgesehen von sogenannten Mehrkanalverbindungen). Wie die Darstellung in der genannten Zeitschrift zeigt, ist eine größere Anzahl von Anschlußgruppen pro Fernsprechvermittlungsstelle mit einem sicherheitshalber gedoppelten Koppelfeld vorgesehen. Jede Anschlußgruppe umfaßt eine Mehrzahl von Anschlußeinheiten. Es gibt Anschlußeinheiten verschiedener Art je nach der speziellen Art der angeschlossenen Leitungen. Teilnehmerleitungen sind in der Regel Analog-Leitungen, können aber auch in PCM-Technik realisiert sein. Verbindungsleitungen können ebenfalls Analog-Leitungen sein. Sie können aber auch als PCM-Kanäle realisiert sein, die in bekannter Weise in PCM-Übertragungssystemen mit jeweils einer Zeitmultiplex-Leitung zusammengefaßt sind. Die genannten Anschlußeinheiten sind unterschiedlich aufgebaut, und zwar jeweils entsprechend der betreffenden Technik der anzuschließenden Teilnehmer- und Verbindungsleitungen, und je nachdem, ob hierbei Analog-Technik oder Zeitmultiplex-Technik realisiert ist. In der Regel wird eine Anschlußeinrichtung für eine Mehrzahl von zum Beispiel acht Analog-Teilnehmerleitungen vorgesehen. Ebenso wird eine Anschlußeinheit für eine Mehrzahl von Analog-Verbindungsleitungen vorgesehen. Pro Zeitmultiplex-Verbindungsleitung eines PCM-Übertragungssystems wird in der Regel eine eigene Anschlußeinrichtung vorgesehen. Ebenso gut wäre es aber auch möglich, an eine einzige Anschlußeinrichtung mehr als eine Zeitmultiplex-Verbindungsleitung eines PCM-Übertragungssystems anzuschließen, zum Beispiel zwei Zeitmultiplex-Leitungen.

Durch naturgemäße Zusammenfassung einer weiter oben beispielsweise angegebenen Anzahl von Kanälen jeweils in einem einzigen PCM-Übertragungssystem ist deren Zuordnung selbstverständlich auch nur zu einer einzigen Verkehrsrichtung bedingt, denn die betreffenden Kanäle müssen ja den gleichen Verlauf nehmen, wie die Zeitmultiplex-Leitung dieses PCM-Übertragungssystems. Da ebenso aufgrund dieser Zusammenfassung der Anschluß einer Zeitmultiplex-Leitung eines PCM-Übertragungssystems an eine Anschlußeinheit auch eine Zuordnung der betreffenden Kanäle zu einer einzigen Anschlußeinheit und damit zu einer einzigen Anschlußgruppe zwangsläufig zur Folge hat, ergibt sich für den Fall, daß für eine Verkehrsrichtung nur die Kanäle (Kanalpaare) eines einzigen PCM-Übertragungssystems bereitgestellt sind, daß bei einem Ausfall einer Anschlußgruppe sämtliche Verbindungsmöglichkeiten in der betreffenden Verkehrsrichtung ausfallen, also in vermittlungstechnischer Hinsicht ein ganzes Richtungsbündel.

Um den zuvor erläuterten Effekt des Totalausfalles eines Richtungsbündels lediglich aufgrund des Ausfalles einer Anschlußgruppe zu vermeiden, ist bisher in bekannten Fällen vorgesehen worden, unabhängig voneinander zwei PCM-Übertragungssysteme pro Verkehrsrichtung vorzusehen, und die Zeitmultiplex-Leitungen dieser Übertragungssysteme an Anschlußeinheiten zweier verschiedener Anschlußgruppen anzuschalten. Dies ist besonders bei kleinen Richtungsbündeln wegen der Doppelung der PCM-Übertragungssysteme aufwendig und unwirtschaftlich.

Um nun in einer Schaltungsanordnung der hier behandelten Art im Hinblick auf die Möglichkeit eines Ausfalles einer Anschlußgruppe eine Doppelung eines PCM-Übertragungssystems pro Verkehrsrichtung nicht vorsehen zu müssen, und um dabei zu vermeiden, daß alleine aufgrund des Ausfalles einer Anschlußgruppe, das heißt des Ausfalles der Kanalpaare des betreffenden PCM-Übertragungssystems, eine ganze Verkehrsrichtung ausfallen kann bzw. muß, ist bereits für eine Fernsprechvermittlungsanlage der eingangs angegebenen bekannten Art gemäß dem Luxemburgischen Patent 86.734 (entspricht inhaltlich der Europäischen Patentanmeldung 87 108 702.9 = VPA 86 P 1394) vorgesehen worden, jeweils zwei Anschlußgruppen paarweise einander zuzuordnen, wobei weiterhin vorgesehen ist, daß die Anschlußeinrichtungen jeder dieser beiden Anschlußgruppen, die im Normalbetrieb mit der Zeitmultiplex-Koppeleinrichtung ihrer eigenen Anschlußgruppe verbunden sind, im Notbetrieb einer der beiden Anschlußgruppen zu der Zeitmultiplex-Koppeleinrichtung der jeweils anderen Anschlußgruppe umschaltbar sind.

Dies bewirkt, daß ein PCM-Übertragungssystem mit seinen Kanälen bei Ausfall der betreffenden Anschlußgruppe weiter betrieben werden kann. In diesem Betriebsfalle wird also eine doppelte Anzahl von Kanälen (Kanalpaaren) über eine Anschlußgruppe, d. h. über die jeweils andere der beiden einander paarweise zugeordneten Anschlußgruppen vermittelt. Dies führt zwar zu einer besonders großen verkehrsmnäßigen Belastung der betreffenden Anschlußgruppe und ggf. zu einer Mehrung von Gassenbesetztfällen, jedoch haben sämtliche über die betreffenden Kanäle im Aufbau befindlichen Verbindungen die gleiche Erfolgs-Chance. Dabei kann es sich ergeben, daß eine Mehrzahl von Verkehrsrichtungen nur noch mit der halben Verkehrsleistung betrieben werden kann. Jedoch können Verbindungen in sämtliche Verkehrsrichtungen überhaupt noch hergestellt werden und es wird der Totalausfall der primär betroffenen Verkehrsrichtung bzw. Verkehrsrichtungen vermieden. Durch eine stärkere Bemessung des Teilkoppelfeldes jeder der Anschlußgruppen hinsichtlich der Anzahl der verbindungsindividuellen Durchschaltemöglichkeiten sowie hinsichtlich der Verarbeitungskapazität jedes ihrer dezentralen Steuerwerke kann natürlich die Verkehrsleistung auch wieder erhöht werden in beiderlei Hinsicht.

In Fernmeldevermittlungsanlagen gemäß dem Oberbegriff des Anspruchs 1 sind Umschalter pro Anschlußeinrichtung vorgesehen, über die diese im normalen Betrieb mit dem Teilkoppelfeld der jeweils betreffenden Anschlußgruppe verbunden sind, über die sie aber bei der Betätigung zu dem Teilkoppelfeld der jeweils betreffenden Anschlußgruppe verbunden sind, über die sie aber bei deren Betätigung zu dem Teilkoppelfeld der jeweils anderen Anschlußgruppe umschaltbar, d. h. auch zugleich von dem der eigenen Anschlußgruppe abtrennbar sind. Hieraus resultiert in entsprechenden Anordnungen das Problem, daß im Zeitpunkt der Umschaltung in der Regel bereits eine größere Anzahl von Verbindungen besteht, d.h. Verbindungen, die bereits von Teilnehmerstelle zu Teilnehmerstelle vollständig durchgeschaltet sind, und daß diese Verbindungen unterbrochen werden. Diese Umschaltung ist sowohl für die betreffenden Teilnehmer sehr störend, als auch für die betreffenden Vermittlungsstellen sehr arbeitsaufwendig,weil die abgebrochenen Verbindungen größtenteils von denselben Teilnehmern gleich anschließend wieder neu aufgebaut werden. Der störende Effekt für die betreffenden Teilnehmer besteht nicht nur darin, daß laufende Telefongespräche unvorhersehbar und abrupt unterbrochen werden, sondern auch darin, daß von einer solchen Unterbrechung auch Verbindungen betroffen werden können, die zu Datenübertragungszwecken, Steuerungszwecken, Überwachungszwecken und dgl. aufgebaut sein könnnen, deren zwangsweise Unterbrechung also in ganz besonderem Maße störend ist. Ein anschließender Wiederaufbau jeder der abgebrochenen Verbindungen bedeutet überdies für die betreffenden Vermittlungsanlagen, insbesondere für zentralgesteuerte Vermittlungsanlagen, daß die betreffenden informationsverarbeitenden sowie die die Verbindungsdurchschaltungen steuernden zentralen und teilzentralen Schalteinrichtungen von einer stoßartigen, länger andauernden Überbelastung getroffen werden.

Um nun in einer Schaltungsanordnung der hier behandelten Art im Zusammenhang mit einer erforderlich werdenden Umschaltung - aus welchem Grunde eine solche auch immer erforderlich werden mag - bestehende Verbindungen nicht zu unterbrechen, und um einen Wiederaufbau derselben nebst den aufgezeigten negativen Auswirkungen, die ja nicht nur in der betreffenden einzelnen Vermittlungsstelle, sondern auch in sämtlichen anderen von den betreffenden abgebrochenen und wieder neu aufzubauenden Verbindungen tangierten Vermittlungsstellen auftreten, in Zusammenhang einer solchen Umschaltung nicht vornehmen zu müssen, ist bereits vorgeschlagen worden (deutsche Patentanmeldung P 37 17 387.1 = VPA 87 P 1315 DE), daß in Vorbereitung auf eine Umschaltung innerhalb jedes dieser Paare von einander zugeordneten Anschlußgruppen jede der betreffenden beiden dezentralen Steuereinrichtungen Verbindungsdaten, die bezüglich aller über das jeweils zugeordnete Teilkoppelfeld bestehender individueller Verbindungen angeben, welcher außenseitige Teilkoppelfeldanschluß jeweils mit welchem innenseitigen Teilkoppelfeldanschluß verbunden ist, von jeder der beiden dezentralen Steuereinrichtungen über dezentrale, den Anschlußgruppen-Paaren jeweils individuelle Übertragungswege an die jeweils entsprechende Partner-Steuereinrichtung übertragen werden, und daß jede der beiden dezentralen Steuereinrichtungen anhand dieser übertragenen und jeweils von ihr empfangenen Verbindungsdaten einzelne Teilverbindungen über das Teilkoppelfeld der betreffenden zugeordneten Anschlußgruppe jeweils zwischen innenseitigen Teilkoppelfeldanschlüssen und außenseitigen Teilkoppelfeldanschlüssen aufbaut, und zwar einerseits solchen außenseitigen Teilkoppelfeldanschlüssen, mit denen durch eine Umschaltung die Anschlußeinheiten der jeweiligen Partner-Anschlußgruppe durch die Umschaltung verbindbar sind, und andererseits solchen innenseitigen Teilkoppelfeldanschlüssen, mit denen durch diese Umschaltung die Anschlußeinheiten der jeweiligen Partner-Anschlußgruppe verbindbar sind.

Ebenfalls ist in diesem Zusammenhang bereits in ähnlicher Weise vorgeschlagen worden (deutsche Patentanmeldung P 37 17 386.3 = VPA 87 P 1314 DE), daß jedem dezentralen Steuerwerk ein Verbindungsdatenspeicher zugeordnet ist, in welchem pro durchgeschaltete Verbindung Verbindungsdaten darüber gespeichert sind, welcher außenseitige Teilkoppelfeldanschluß jeweils mit seinesgleichen innerhalb derselben Anschlußgruppe oder in einer weiteren Anschlußgruppe verbunden ist, daß aufgrund eines für jeweils ein Paar von Anschlußgruppen und darin für jeweils eine Anschlußgruppe gegebenen Umschaltvorbereitungskennzeichens sowohl die betreffenden beiden dezentralen Steuereinrichtungen gegenüber neuen Verbindungsherstellungsaufträgen gesperrt werden, insbesondere, daß auch noch im Aufbau befindliche Verbindungen gesperrt werden, als auch die dezentrale Steuereinrichtung der ersten Anschlußgruppe die in ihrem Verbindungsspeicher gespeicherten Verbindungsdaten an die dezentrale Steuereinrichtung der zweiten Anschlußgruppe überträgt, und daß diese anhand dieser Verbindungsdaten, die vorzugsweise in dem Verbindungsspeicher der zweiten Anschlußgruppe zwischengespeichert werden, Teilverbindungen über das betreffende Teilkoppelfeld, das Zentralkoppelfeld und dasselbe oder ein weiteres Teilkoppelfeld herstellt, wobei diese Teilverbindungen von solchen außenseitigen Teilkoppelfeldanschlüssen ausgehen, mit denen durch die Umschaltung die Anschlußeinheiten der ersten Anschlußgruppe verbindbar sind.

Die zuletzt angesprochenen vorgeschlagenen Lösungen ermöglichen es, bereits aufgebaute Verbindungen in Zusammenhang mit und mit Hilfe der beschriebenen Umschaltemaßnahmen bestehen zu lassen. In diesem Sinne können diese bereits aufgebauten Verbindungen sowohl solche sein, die von Teilnehmerstelle zu Teilnehmerstelle hergestellt sind, ohne daß sich der betreffende gerufene jeweilige Teilnehmer bereits gemeldet hat, also Verbindungen, die sich in der Rufphase befinden, also auch solche, bei denen sich der gerufene jeweilige Teilnehmer bereits gemeldet hat, bei denen also die betreffenden beiden Teilnehmerstellen sich tatsächlich im Kommunikationszustand befinden. Die vorgeschlagenen Lösungen subsummieren jedoch den technischen Sachverhalt, daß noch im Aufbau befindliche Verbindungen abgebrochen werden müssen, was auch gilt für das Verbindungsherstellungs-Stadium vor Wahlbeginn, wenn also der jeweils gerufene Teilnehmer mit einem freien Wahlsatz verbunden worden ist, ohne bereits mit der Wahl begonnen zu haben, oder mit einem solchen erst noch zu verbinden ist. Denn an einem Zustandekommen von solchen im Aufbau befindlichen Verbindungen sind Teilsteuerwerk(e) und zentraler Prozessor beteiligt. Sie stehen dabei in einem Informationsaustausch, der nicht durch individuelle Verbindungen betreffende Umschaltemaßnahmen der erwähnten Art gestört werden darf. Deshalb werden bei den angegebenen vorgeschlagenen Lösungen bereits oder noch im Aufbau befindliche Verbindungen nicht in die Umschaltemaßnahmen einbezogen, sondern abgebrochen, d.h. von der Vermittlungsstelle her ausgelöst, damit entsprechende Verbindungsherstellungsversuche von den betreffenden rufenden Teilnehmern erneut gestartet werden, wodurch die betreffenden Verbindungen dann von vornherein über die in der angegebenen Weise bereits umgeschalteten Verbindungswege aufgebaut werden.

Um nun aber auch solche im Aufbau befindliche Verbindungen der zuletzt angesprochenen Art nicht abbrechen zu müssen, sondern den laufenden Vermittlungsbetrieb möglichst lückenlos und möglichst übergangslos fortführen zu können, und hierzu den weiteren Verbindungsaufbau für noch im Aufbau befindliche Verbindungen, sogenannte "transiente Verbindungen", d.h.also für jede dieser Verbindungen bis zu deren jeweiliger endgültiger Durchschaltung weiterführen zu können, ist durch die deutsche Patentanmeldung P 37 33 765.3 (VPA87P1767) bereits vorgeschlagen worden, daß die von einer Anschlußeinrichtung innerhalb einer Anschlußgruppe zu ihrem Teilkoppelfeld führenden anschlußgruppeninternen Internleitungen innerhalb einer Umleitungsphase einzeln, das heißt verbindungsindividuell, zum Teilkoppelfeld der jeweils anderen Anschlußgruppe umschaltbar sind, daß innerhalb dieser Umleitungsphase die Durchführung von Umschaltungen auf diejenigen dieser Internleitungen, die unbelegt sind, bzw. die frei werden, zum Beispiel durch Verbindungsauslösung, beschränkt ist, vorzugsweise auf diese sowie zusätzlich solche Internleitungen, über die Verbindungen durchgeschaltet sind, deren Teilnehmer aufgrund Meldens des jeweils Gerufenen vollständig miteinander in Verbindung stehen, bzw. in Verbindung treten, insbesondere auf mit solchen Verbindungen belegte Internleitungen, bei denen die Verbindungsherstellungsvorgänge zwar abgewickelt sind, bzw. abgewickelt worden sind, der jeweils gerufene Teilnehmer sich aber noch nicht gemeldet hat, und daß mit Beendigung der Umleitungsphase die zu diesem Zeitpunkt noch im Aufbau befindlichen Verbindungen ausgelöst werden.

Für die Erfindung besteht ganz allgemein die Aufgabe, in einer Schaltungsanordnung der weiter oben angegebenen Art, von welcher die Erfindung ausgeht, im Aufbau befindliche Verbindungen ebenfalls nicht abbrechen zu müssen, um den laufenden Vermittlungsbetrieb möglichst lückenlos und möglichst übergangslos fortführen zu können. Es sollen hierfür andere Maßnahmen als die bereits vorgeschlagenen angegeben werden, namentlich hinsichtlich der Umschaltung der Internleitungen nach Maßgabe des jeweiligen Fortschrittes der individuellen Verbindungen. Diese Umschaltung soll im Vergleich zu der zuvor angegebenen vorgeschlagenen Lösung mehr vereinheitlicht werden, und trotzdem soll erreicht werden, daß für im Aufbau befindliche Verbindungen der weitere Verbindungsaufbau bis zu deren jeweiliger endgültiger Durchschaltung weitergeführt werden kann.

Diese Aufgabe wird durch die Merkmale des Anspruchs 1 gelöst.

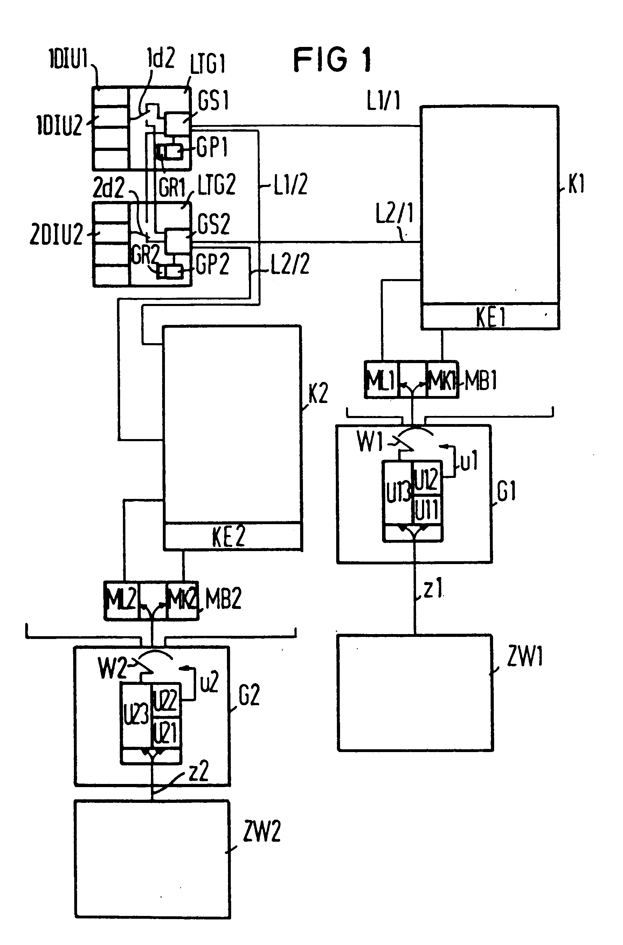

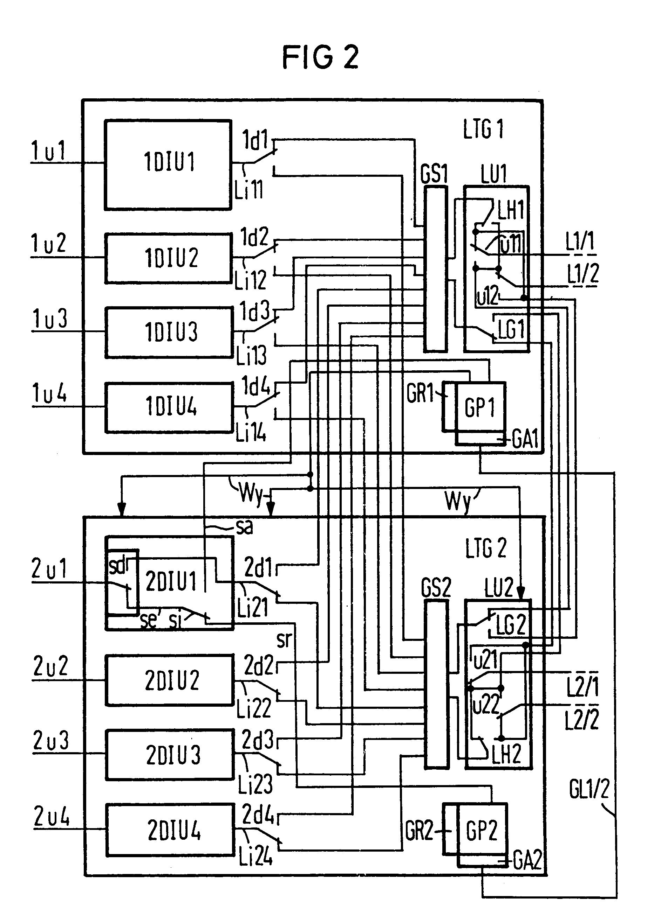

In den Zeichnungen Figur 1 und Figur 2 ist ein Ausführungsbeispiel der Erfindung nur in wesentlich zu ihrem Verständnis beitragenden Bestandteilen dargestellt, worauf dieselbe jedoch keineswegs beschränkt ist. Dabei zeigt Figur 1 auszugsweise eine Fernsprechvermittlungsanlage der Art, wie sie auch in der deutschen Patentschrift 3 128 365 (VPA 81 P 6257) beschrieben ist. Figur 2 zeigt weitere erfindungswesentliche Details.

Bevor die Beschreibung speziell auf die erfindungswesentlichen Besonderheiten des Ausführungsbeispiels eingeht, erläutert sie die Arbeitsweise einer neuzeitlichen Fernsprechvermittlungsanlage, in der die Erfindung angewendet ist. Dabei geht die Beschreibung von bekannten Zeitmultiplex-Fernsprechvermittlungsanlagen mit PCM-Technik aus, wie sie in der Fachliteratur vielfältig und detailliert beschrieben sind, beispielsweise in der weiter oben genannten Zeitschrift "telcom report". Hierin sind unter anderem auf Seite 19 ff periphere Anschlußgruppen in diesem Fernsprechvermittlungssystem beschrieben. Wie es ähnlich auch in Bild 1 auf Seite 8 der genannten Zeitschrift dargestellt ist, sind Koppelfeld (SN) und zentraler Prozessor (CP) gedoppelt vorgesehen, in Figur 1 mit "K1" und "K2" und mit "ZW1" und "ZW2" bezeichnet.

In den Zeichnungen sind zwei Anschlußgruppen LTG1 und LTG2 auszugsweise dargestellt, die zu einer zentralgesteuerten Zeitmultiplex-Fernsprechvermittlungsanlage in PCM-Technik gemäß Figur 1 gehören. Sie sind in an sich bekannter Weise über Zeitmultiplex-Leitungen L1/1, L2/1 , L1/2 und L2/2 an das mehrstufige, Zeitmultiplex-Eingänge und Zeitmultiplex-Ausgänge aufweisende zentrale und gedoppelte Koppelfeld K1/K2 gemäß Figur 1 angeschlossen. Dabei ist jeder dieser Anschlüsse entsprechend dieser Dopplung des Koppelfeldes ein zweifacher. Jede dieser beiden pro Anschlußgruppe, zum Beispiel LTG1, vorgesehenen Zeitmultiplex-Leitungen weist für jede der beiden Übertragungsrichtungen je eine größere Anzahl von zum Beispiel dreißig Kanälen auf und ist dementsprechend - wie auch in der weiter oben genannten Patentschrift im Detail dargestellt und beschrieben - sowohl an je einen Zeitmultiplex-Eingang als auch an je einen Zeitmultiplex-Ausgang jedes dieser beiden Koppelfelder angeschlossen.

Ferner ist gemäß Figur 1 zu jedem der beiden parallelen Koppelfelder K1/K2 je ein zentraler Prozessor ZW1 bzw. ZW2 vorgesehen, mit dessen Hilfe die gesamten Steuerungsvorgänge für die Verbindungsherstellung über das jeweilige zentrale Koppelfeld K1 bzw. K2 in an sich bekannter Weise mittels einer Puffereinrichtung MB1/MK1 bzw. MB2/MK2 und einer Koppelfeldeinstelleinrichtung KE1 bzw. KE2 bewerkstelligt werden, was im einzelnen in dem genannten Patent beschrieben ist. Hierzu werden Informationen durch den zentralen Prozessor ZW1 bzw. ZW2 (zentrales Steuerwerk) von den Anschlußgruppen, zum Beispiel LTG1 und weiteren, hereingeholt sowie in umgekehrter Richtung zu ihnen hin abgegeben. Hierbei wirken dezentrale Steuereinrichtungen GP1, GP2 und weitere ihresgleichen in den Anschlußgruppen in bekannter Weise mit. Für diesen Informationsaustausch werden die Anschlußgruppen und die Anschlußeinheiten in ihnen adressiert angesteuert.

Von den beiden zentralen Koppelfeldern K1 und K2 und den beiden zentralen Prozessoren ist jeweils ein Koppelfeld zum Beispiel K1 und ein zentraler Prozessor, zum Beispiel ZW1, in Betrieb, während das andere Koppelfeld und der andere Prozessor für den Fall einer notwendig werdenden Ersatzschaltung zur Verfügung stehen. Zur Vereinfachung der weiteren allgemeinen Beschreibung ist deshalb vorläufig immer nur vom zentralen Koppelfeld K1 und vom zentralen Prozessor ZW1 (also jeweils einem) die Rede.

Den vom zentralen Prozessor ZW1 an die genannten Anschlußgruppen zu übertragenden Informationen, die auch Abrufbefehle zum Abruf von von den Anschlußgruppen LTG1, LTG2 bzw. von den Anschlußeinheiten 1DIU1 bis 1DIU4 zum zentralen Steuerwerk zu übertragenden Informationen, zum Beispiel Wahlinformationen, sein können, ist jeweils eine die betreffende Anschlußeinheit bezeichnende Adresse vorangestellt. Ist nun eine Anschlußeinheit vom zentralen Prozessor ZW1 anzusteuern zwecksÜbertragung einer Information (gegebenenfalls Abrufbefehl) von diesem an jene, so überträgt dasselbe die Adresse und die Information sukzessive nacheinander zunächst zu einer Eingabe-Ausgabe-Einrichtung G1 (in "telcom report": IOP). Diese nimmt beide zunächst auf und speichert sie.

Wie in der zuvor genannten Patentschrift erläutert ist, bestehen zwischen der Eingabe-Ausgabe-Einrichtung G1 einerseits und jeder der Anschlußgruppen, und zwar ihren dezentralen Steuereinrichtungen, zum Beispiel GP1, GP2 andererseits über die Zeitmultiplex-Leitungen L1/1 bzw. L2/1, und zwar über jeweils einen Kanal pro Zeitmultiplexleitung, sowie über das Koppelfeld K1 und über Puffereinrichtungen MB1/ML1 Datenverbindungen. Hat nun die Eingabe-Ausgabeeinrichtung eine Information nebst Adresse vom zentralen Steuerwerk ZW1 über den Weg z1 empfangen, so führt sie von dieser Adresse einen ersten Adressenteil unter anderem einem Adressen-Signalkanal-Umsetzer U11/U12 zu. Dieser erste Adressenteil entspricht der jeweiligen Anschlußgruppe und damit der ihr zugeordneten Datenverbindung über Puffereinrichtung MB1 und Koppelfeld K1. Der genannte Umsetzer U11/U12 gibt eine dem ersten Adressenteil entsprechende Steuerinformation ab, die er über den Steuerweg u1 einem elektronichen Wähler W1 zuführt, welcher dadurch auf den betreffenden Signalkanal (über MB1 verlaufend) eingestellt wird. Dadurch ist die Eingabe-Ausgabe-Einrichtung G1 über diesen mit der dezentralen Steuereinrichtung, zum Beispiel GP1, der betreffenden Anschlußgruppe, zum Beispiel LTG1, verbunden und überträgt nun zu dieser die Information nebst vollständiger Adresse, das heißt einschließlich erstem Adressenteil.

Es ist eine größere Anzahl von einem Anschluß von verschiedenen Verkehrsrichtungen zugeordneten Zeitmultiplex-Verbindungsleitungen dienenden Anschlußgruppen vorgesehen, von denen die beiden Anschlußgruppen LTG1 und LTG2 auszugsweise dargestellt sind. Bedeutung, Aufgaben und Funktionen dieser Anschlußgruppen sind in der angegebenen Zeitschrift sehr ausführlich beschrieben, wovon im vorliegenden Falle als von bekannten Tatsachen ausgegangen wird.

Wie bereits erwähnt und wie auch aus der genannten Zeitschrift weiterhin hervorgeht, enthält jede der Anschlußgruppen jeweils eine Mehrzahl von Anschlußeinheiten. Diese dienen in bekannter Weise dem Anschluß von Teilnehmerleitungen, Verbindungsleitungen oder Übertragungssystemen mit verbindungsindividuell belegbaren Kanälen. Es gibt verschiedene Arten von Anschlußeinheiten, zum Beispiel solche für Analog-Teilnehmerleitungen, andere für Digital-Teilnehmerleitungen, andere für Analog-Verbindungsleitungen und dergleichen. Ebenso gibt es Anschlußeinheiten, die dem Anschluß jeweils einer Zeitmultiplex-Verbindungsleitung dienen, welche bekanntlich eine größere Anzahl von zum Beispiel vierundzwanzig oder dreißig verbindungsindividuell belegbaren PCM-Kanälen umfassen kann. Bekanntlich handelt es sich hierbei genaugenommen um jeweils ein Kanalpaar pro Verbindung, wobei jeweils ein Kanal für die eine Übertragungsrichtung und der andere für die andere Übertragungsrichtung vorgesehen ist.

In der genannten Zeitschrift ist ferner beschrieben, daß eine Anschlußeinheit bei Analog-Teilnehmerleitungen bzw. Analog-Verbindungsleitungen jeweils für eine Mehrzahl von Leitungen vorgesehen ist. Anschlußeinheiten für zeitmultiplex betriebene Übertragungs-Systeme, die jeweils eine größere Anzahl von Kanalpaaren umfassen (siehe oben), sind so aufgebaut, daß an eine Anschlußeinheit ein Übertragungssystem mit vierundzwanzig oder dreißig Kanalpaaren angeschlossen ist. In der genannten Zeitschrift ist ferner beschrieben, daß in einer Anschlußgruppe, die mit Anschlußeinheiten für Zeitmultiplex-Übertragungssysteme bestückt ist, insgesamt vier oder fünf solche Anschlußeinheiten vorgesehen sind. Ferner ist in der genannten Zeitschrift angegeben, daß innerhalb einer Anschlußgruppe Anschlußeinheiten mit einer Zeitmultiplex-Koppeleinrichtung der betreffenden Anschlußgruppe ("Teilkoppelfeld") verbunden und über diese mit Kanälen des der betreffenden Anschlußgruppe entsprechenden Zeitmultiplex-Einganges und des entsprechenden Zeitmultiplex-Ausganges des zentralen Koppelfeldes verbindbar sind.

Bei dieser zahlenmäßigen Zuordnung geht es unter anderem immer auch darum, daß die Verkehrsbelastungen auf den verschiedenen Teilabschnitten der Verbindungswege möglichst gut aneinander angepaßt sind. Praktisch bedeutet dies, daß die Anzahl von Kanalpaaren, die die an die Anschlußeinheiten einer Anschlußgruppe angeschlossenen Zeitmultiplex-Verbindungsleitungen (PCM-Übertragungssysteme), von denen jedes einer anderen Verkehrsrichtung zugeordnet sein kann, die aber auch zu zweit oder zu mehreren jeweils gemeinsam ein und derselben Verkehrsrichtung zugeordnet sein können, insgesamt umfassen, etwa gleich der Anzahl von Kanalpaaren ist, die diejenige Zeitmultiplex-Leitung umfaßt, die die betreffende Anschlußgruppe mit dem zentralen Koppelfeld verbindet. So mögen also die Übertragungssysteme 1u1 bis 1u4 in Figur 2 etwa die gleiche Anzahl von Kanalpaaren aufweisen, wie die Zeitmultiplex-Leitung L1/1.

Da es nun vorkommen kann, daß die dezentralen Steuereinrichtungen (GP), Teilkoppelfelder (GS) oder Zeitmultiplex-Leitungen störungsbedingt ausfallen können, was also auch für die Zeitmultiplex-Leitungen L1/1, L1/2, L2/1 und L2/2 zutrifft, würde dies zur Folge haben, daß auch die Zeitmultiplex-Übertragungssysteme, die jeweils an die Anschlußeinheiten der betreffenden Anschlußgruppe angeschlossen sind, ebenfalls sämtlich nicht mehr für eine Verbindungsherstellung verfügbar sind. Da in der Vermittlungstechnik bei den vorgegebenen Werten und Daten bezüglich der Anzahlen von Kanalpaaren pro Verkehrsrichtung häufig nur ein einziges Übertragungssystem pro Verkehrsrichtung vorgesehen zu werden braucht, würde bei Ausfall einer dezentralen Steuereinrichtung, eines Teilkoppelfeldes oder der eine Anschlußgruppe mit dem zentralen Koppelfeld verbindenden Zeitmultiplex-Leitung auch das betreffende einzige Übertragungssystem pro Verkehrsrichtung ausfallen. Gleiches gilt bei Ausfall der dezentralen Steuereinrichtung zum Beispiel GP1, einer Anschlußgruppe, zum Beispiel LTG1.

Eine solche unvorteilhafte Möglichkeit wird durch die Maßnahme ausgeschlossen, daß jeweils zwei Anschlußgruppen paarweise einander zugeordnet sind. Was diesbezüglich für die beiden in der Zeichnung auszugsweise dargestellten Anschlußgruppen LTG1 und LTG2 gilt, gilt ebenso für alle weiteren Anschlußgruppen mit Anschlußeinrichtungen, an die PCM-Übertragungssysteme in der angegebenen Weise angeschlossen sind. Weiterhin ist vorgesehen, daß die Anschlußeinrichtungen 1DIU1 bis 1DIU4 und 2DIU1 bis 2DIU4 jeder dieser beiden Anschlußgruppen LTG1 und LTG2, die im Normalbetrieb mit der Zeitmultiplex-Koppeleinrichtung Gs1 bzw. Gs2 ihrer eigenen Anschlußgruppe LTG1 bzw. LTG2 verbunden sind, im Notbetrieb einer dieser beiden Anschlußgruppen, zum Beispiel LTG2, zu der ein Teilkoppelfeld bildenden Zeitmultiplex-Koppeleinrichtung, zum Beispiel GS1, der jeweils anderen Anschlußgruppe, zum Beispiel LTG1 umschaltbar sind. Hierzu sind Umschalter 1d1 bis 1d4 und 2d1 bis 2d4 vorgesehen. Diese sind in der Zeichnung in der dem Normalbetrieb entsprechenden Ruhelage dargestellt. Sie werden bei einem Wechsel vom Normalbetrieb zum Notbetrieb aus ihrer dargestellten Ruhelage in ihre Arbeitslage umgeschaltet. Die Notbetriebssituation besteht, wenn bei einer Anschlußgruppe störungsbedingt ein Ausfall der oben angegebenen Art eintritt.

Werden nun die Umschalter 2d1 bis 2d4 bei einem Übergang von der Normalbetriebs-Situation in die Notbetriebs-Situation störungsbedingt aus ihrer dargestellten Ruhelage in ihre Arbeitslage umgeschaltet, so sind von da an die Anschlußeinheiten 2DIU bis 2DIU4 der Anschlußgruppe LTG2 mit der Zeitmultiplex-Koppeleinrichtung GS1 der Anschlußgruppe LTG1 verbunden. Infolgedessen können bei einem Ausfall der Zeitmultiplex-Leitung L2/1 die PCM-Übertragungssysteme 2u1 bis 2u4 mit ihren verbindungsindividuell belegbaren Kanälen weiterhin betrieben werden. Jedes dieser PCM-Übertragungssysteme kann einzeln einer eigenen Verkehrsrichtung zugeordnet sein. Es können auch zwei oder mehr PCM-Übertragungssysteme einer Verkehrsrichtung zugeordnet sein, das heißt, sie können also in vermittlungstechnischer Hinsicht ein gemeinsames Bündel von Kanalpaaren bilden. Besondere Bedeutung in den hier behandelten Zusammenhängen hat aber der Fall, daß für eine Verkehrsrichtung nur ein einziges PCM-Übertragungssystem mit der betreffenden Anzahl von Kanalpaaren vorgesehen ist.

Wie bereits weiter oben erwähnt wurde, werden die Verbindungen über das zentrale Koppelfeld K1 hergestellt. Hierbei wirkt der zentrale Prozessor ZW1 mit. In dem zentralen Prozessor sind die Anschlußgruppen, die in ihnen jeweils enthaltenen Anschlußeinheiten sowie die über jede derselben geführten Kanalpaare mit Hilfe von Adressen ansteuerbar. Es kann nun vorgesehen sein, daß jede der Anschlußeinheiten sowohl mit Hilfe einer Normalbetriebs-Adresse als auch mit Hilfe einer Notbetriebs-Adresse vom zentralen Prozessor her ansteuerbar ist. Diese Normalbetriebs-Adressen und Notbetriebs-Adressen sind also verwendbar nach betriebsgemäßem jeweiligem Bedarf. Es ist also vorgesehen, daß die Anschlußeinheiten, die mit PCM-Übertragungssystemen beschaltet sind, von dem zentralen Prozessor mittels jeweils einer Normalbetriebs-Adresse und jeweils einer Notbetriebs-Adresse ansteuerbar sind, und daß bei Eintritt einer Betriebsstörung in einer Anschlußgruppe, z.B. LTG2, bzw. deren Gruppensteuereinrichtung, z.B. GP2, die beim Normalbetrieb derselben im zentralen Prozessor gesperrten Notbetriebs-Adressen der betreffenden Anschlußeinheiten, z.B. 2DIU1 bis 2DIU4, entsperrt und stattdessen die Normalbetriebs-Adressen dieser Anschlußeinheiten gesperrt werden. Auf nicht im einzelnen dargestellte Weise wird also dem zentralen Prozessor gemeldet, daß eine Anschlußgruppe, z.B. LTG2, vom Normalbetrieb in den Notbetrieb übergeht. Aufgrund dieser Meldung nimmt der zentrale Prozessor den zuvor angegebenen Vorgang der Entsperrung der Notbetriebs-Adressen der betreffenden Anschlußeinheiten sowie der Sperrung der Normalbetriebs-Adressen dieser Anschlußeinheiten vor. Dies gilt in gleicher Weise auch für Ansteuer-Adressen der Kanalpaare, die über die betreffenden Anschlußeinheiten geführt sind. In diesem Zusammenhang ist außerdem vorgesehen, daß die Anschlußeinheiten, zum Beispiel 2DIU1 bis 2DIU4 von dem zentralen Prozessor mittels der Normalbetriebs-Adresse über deren zugeordnete Anschlußgruppe, zum Beispiel LTG2, direkt und mittels der Notbetriebs-Adresse über die jeweils andere Anschlußgruppe, zum Beispiel LTG1 ansteuerbar sind.

In der gleichen Weise, wie die zuvor beschriebene Umschaltung der Verbindungswege (die gesamten Kanalpaare) mittels der Umschalter 2d1 bis 2d4 erfolgt, wird auch die zentrale Taktversorgung der betreffenden Anschlußeinheiten beim Übergang vom Normalbetrieb in den Notbetrieb von der zugeordneten Anschlußgruppe zu der jeweils anderen Anschlußgruppe umgeschaltet. Dadurch ist sichergestellt, daß die Anschlußeinheiten mit derjenigen Anschlußgruppe taktsynchron laufen, zu der hin die jeweilige Umschaltung erfolgt ist. In der gleichen Weise kann auch die Versorgung mit den erforderlichen Betriebsspannungen für die betreffenden Anschlußeinheiten von derjenigen Anschlußgruppe, die vom Normalbetrieb in den Notbetrieb übergegangen ist, zu der jeweils anderen Anschlußgruppe hin umgeschaltet werden. Günstiger noch ist es, die Einrichtungen für die Betriebsspannungsversorgung redundant, das heißt ausfallsicher auszuführen, zum Beispiel zweifach für alle Anschlußeinheiten der beiden Anschlußgruppen.

Teilweise abweichend von dem zuvor Beschriebenen kann auch vorgesehen sein, daß die Anschlußeinheiten von dem zentralen Prozessor über den Anschlußgruppen zugeordnete Signalkanäle mittels jeweils einer Adresse ansteuerbar sind, die einen die jeweilige Anschlußgruppe bezeichnenden ersten Adressenteil und einen die jeweilige Anschlußeinheit innerhalb jener bezeichnenden zweiten Adressenteil umfaßt. Dies wurde bereits erwähnt. Mit Hilfe des ersten Adressenteils der Adresse der betreffenden Anschlußeinheit wird jeweils diejenige Anschlußgruppe angesteuert, zu der die betreffende Anschlußeinheit gehört. Die Ansteuerung der Anschlußgruppe erfolgt in der angegebenen Weise dadurch, daß anhand des ersten Adressenteils eine Einstellinformation im Adressen-Signal-Umsetzer U11/U12 gebildet wird, die über den Steuerweg u dem elektronischen Wähler W1 zugeführt wird, wodurch die Eingabe-Ausgabe-Einrichtung G1 über die Puffereinrichtung MB1 mit demjenigen über das Koppelfeld K1 im durchgeschalteten Zustand bereitgehaltenen Signalkanal verbunden wird, der über eine Zeitmultiplexleitung, zum Beispiel L1/1 zu der betreffenden Anschlußgruppe hin führt. Es ist also ein Adressen-Signalkanal-Umsetzer G1 im zentralen Prozessor vorgesehen, der bei Vorliegen einer Information für eine Anschlußeinheit aus der der Information beigefügten Adresse anhand deren erstem Adressenteil eine von dem Prozesor zur Ansteuerung des betreffenden Signalkanals verwendete Signalkanalnummer abgibt. Diese Signalkanalnummer bezeichnet also den zuvor genannten betreffenden Signalkanal. Diese Signalkanalnummer dient als Einstellinformation, die über den Signalweg u1 zu dem genannten elektronischen Wähler W1 hin zu dessen Einstellung auf den betreffenden Signalkanal weitergegeben wird. Dieser elektronische Wähler kann in jeder beliebigen Weise auch als Koppler ausgebildet sein. - Der Adressen-Signalkanal-Umsetzer G1 im zentralen Prozessor ZW1 kann selbstverständlich auch räumlich gesondert von diesem (wie in Figur 1 dargestellt) vorgesehen sein, kann aber auch Bestandteil desselben sein. Er dient im übrigen in an sich bekannter Weise der Abwicklung der Eingabeprozeduren und Ausgabeprozeduren des zentralen Prozessors ZW1 (IOP in "telcom report").

Wie bereits ausgeführt wurde, wird bei jeweiliger Ansteuerung eines Signalkanals zwecks Ansteuerung der betreffenden Anschlußgruppe die genannte Adresse sowie die Information über diesen Signalkanal übertragen. Adresse und Information werden über den Signalkanal zu der betreffenden Anschlußgruppe und hier über die erwähnte Zeitmultiplex-Koppeleinrichtung, zum Beispiel GS1, zunächst zu der betreffenden dezentralen Steuereinrichtung, zum Beispiel GP1, übertragen. Diese erkennt anhand der Adresse, und zwar insbesondere anhand des darin enthaltenen zweiten Adressenteils, zu welcher der Anschlußeinheiten die betreffende Information weiterzuleiten ist.

In dem zuvor beschriebenen Zusammenhang sei zunächst davon ausgegangen, daß der weiter oben bereits erwähnte erste Adressenteil diejenige Anschlußgruppe bezeichnet, zu der hin Adresse und Information in der zuvor beschriebenen Weise übertragen wurden. Der zweite Adressenteil gibt nun an, welche der Anschlußeinheiten innerhalb der betreffenden Anschlußgruppe, zum Beispiel LTG1, diejenige ist, zu welcher hin die betreffende Information weiterzuleiten ist. Es sei angenommen, daß dies die Anschlußeinheit 1DIU2 sei. Weiterhin sei angenommen, daß sich die betreffende Anschlußgruppe, zum Beispiel LTG1 im Normalbetriebszustand befindet. In diesem Falle ist also der Umschalter 1d2 in der in Figur 1 dargestellten Ruhelage. Die Anschlußeinheit 1DIU2 ist folglich in diesem Betriebszustand über die Ruheseite des Umschalters 1d2 mit der Zeitmultiplex-Koppeleinrichtung GS1 der Anschlußgruppe LTG1 verbunden.

Wie zuvor erläutert, hat die dezentrale Steuereinrichtung GP1 mit der Information, die für die Anschlußeinheit 1DIU2 bestimmt ist, auch die Adresse empfangen und zwischengespeichert, die aus einem ersten, die Anschlußgruppe LTG1 bezeichnenden Adressenteil und einem zweiten, die Anschlußeinheit 1DIU2 in ihr bezeichnenden zweiten Adressenteil umfaßt. Anhand des ersten Adressenteils erkennt die dezentrale Steuereinrichtung GP1, daß die betreffende Information an eine Anschlußeinheit weiterzuleiten ist, die zu der gleichen Anschlußgruppe LTG1 gehört. Anhand des zweiten Adressenteils erkennt die dezentrale Steuereinrichtung GP1, daß die Informationen zu der Anschlußeinheit 1DIU2 weiterzuleiten sind. Aufgrund dessen steuert die dezentrale Steuereinrichtung GP1 die Zeitmultiplex-Koppeleinrichtung GS1 so, daß ein Übertragungsweg von der dezentralen Steuereinrichtung GP1 zur Anschlußeinheit 1DIU2 durchgeschaltet wird, der also über die Ruheseite des Umschalters 1d2 verläuft.

In Abwandlung von dem zuvor Beschriebenen kann auch vorgesehen werden, daß die dezentrale Steuereinrichtung GP1 in dem angegebenen Zusammenhang nicht auch die Information mit der betreffenden Adresse empfängt, sondern lediglich die Adresse selber, und daß sie anhand derselben einen direkten Übertragungsweg für die Information von dem über die Zeitmultiplex-Leitung L1/1 verlaufenden Signalkanal über die Zeitmultiplex-Koppeleinrichtung GS1 und die Ruheseite des Umschalters 1d2 zur Anschlußeinrichtung 1DIU2 durchschaltet. In diesem Falle wird also die Adresse über den Signalkanal in der dezentralen Steuereinrichtung GP1 empfangen und hier zur Durchschaltung eines Direktweges von dem genannten Signalkanal zu der betreffenden Anschlußeinheit verwendet. In diesem Falle würde also eine Zwischenspeicherung der betreffenden Information in der dezentralen Steuereinrichtugn GP1 entfallen.

In diesem Zusammenhang ist noch die spezielle Notbetriebssituation zu erläutern. Wie bereits erwähnt wurde, kann eine störungsbedingte Notbetriebssituation dadurch verursacht sein, daß der Signalkanal zwischen einer Anschlußgruppe und dem zentralen Prozessor nicht benutzbar ist, oder daß die dezentrale Steuereinrichtung, zum Beispiel GP2, und/oder die Zeitmultiplex-Koppeleinrichtung, zum Beispiel GS1, der betreffenden Anschlußgruppe nicht die erforderliche Funktionsfähigkeit aufweist. Dies ist für den zentralen Prozessor anhand der kontinuierlichen Durchführung eines Überwachungsverfahrens erkennbar, das im einzelnen in der bereits genannten Zeitschrift "telcom report", sowie in der deutschen Offenlegungsschrift 3 106 903 beschrieben ist. Erkennt der zentrale Prozessor eine Betriebsstörung, die zum Beispiel die Anschlußgruppe LTG2 betrifft, so erfolgt der gesamte weitere Datenaustausch zwischen zentralem Prozessor ZW1 und den Anschlußeinheiten 2DIU1 bis 2DIU4 der von der Betriebsstörung betroffenen Anschlußgruppe LTG2 für die Dauer der Betriebsstörung über die Anschlußgruppe LTG1. Hierzu werden sämtliche Umschalter in der betroffenen Anschlußgruppe LTG2 aus ihrer dargestellten Ruhelage in weiter unten noch mehr im Detail beschriebener Weise in ihre Arbeitslage umgelegt. Dies kann auf die Weise erfolgen, daß zunächst die aufgetretene Betriebsstörung innerhalb der von ihr betroffenen Anschlußgruppe selber erkannt wird, oder daß der zentrale Prozessor ZW1 die die Anschlußgruppe LTG2 betreffende Betriebsstörung erkennt; er überträgt dann eine entsprechende Information hierüber an die dezentrale Steuereinrichtung GP1 der paarweise zugeordneten Anschlußgruppe LTG1, worauf jene dann Befehle zur Betätigung der genannten vier Umschalter in der Anschlußgruppe LTG2 an diese abgibt.

Bei Eintritt einer die Anschlußgruppe LTG2 betreffenden Betriebsstörung werden also die Umschalter 2d1 bis 2d4 betätigt. Dementsprechend werden die Anschlußeinheiten 2DIU1 bis 2DIU4 mit der Zeitmultiplex-Koppeleinrichtung GS1 der Anschlußgruppe LTG1 verbunden. Diese Umschaltungen erfolgen - wie weiter unten noch genauer erläutert wird, nach Maßgabe verschiedener bestehender Möglichkeiten.

Erkennt der zentrale Prozessor ZW1 die die Betriebsstörung der Anschlußgruppe LTG2 betreffende Funktionsstörung, erkennt er also, daß der weitere Datenaustausch mit den entsprechenden Anschlußeinheiten 2DIU1 bis 2DIU4 über den Signalkanal der Anschlußgruppe LTG1 abzuwickeln ist, so gibt er eine entsprechende Information auch an den Adressen-Signal-Umsetzer U11/U12 in der Eingabe-Ausgabe-Einrichtung G1. Durch diese Information wird die die Anschlußeinheiten 2DIU1 bis 2DIU4 in der Anschlußgruppe LTG2 betreffende Signalkanalnummer vorübergehend geändert. Praktisch bedeutet dies, daß für die Dauer der Betriebsstörung der Anschlußgruppe LTG2 bei Ansteuerung einer ihrer Anschlußeinheiten der Adressen-Signalkanal-Umsetzer bei Erhalt einer Adresse mit einem die Anschlußgruppe LTG2 bezeichnenden ersten Adressenteil eine Steuerinformation über den Steuerweg u1 zum elektronsichen Wähler W1 hin abgibt, die bewirkt, daß in diesem Falle anstelle des Signalkanals der Anschlußgruppe LTG2 vielmehr der Signalkanal der Anschlußgruppe LTG1 durch den elektronsichen Wähler W1 angesteuert wird. Der zentrale Prozessor gibt also zur Ansteuerung einer Anschlußeinheit 2DIU1 bis 2DIU4 im Zustand der Betriebsstörung der Anschlußgruppe LTG2 die Adresse und die Information für die betreffende Anschlußgruppe ebenso, wie im Zustand des Normalbetriebs der Anschlußgruppe LTG2 ab. Im Adressen-signalkanal-Umsetzer U11/U12 ist für die Dauer der Betriebsstörung der Anschlußgruppe LTG2 festgehalten, daß anstelle ihres Signalkanales vielmehr der Signalkanal der Anschlußgruppe LTG1 anzusteuern ist. Die die Betriebsstörung der Anschlußgruppe LTG2 betreffende Umleitung der Informationen für ihre Anschlußeinheiten erfolgt also in der Eingabe-Ausgabe-Einrichtung mit Hilfe des elektronischen Wählers W1 aufgrund der vorläufigen Änderung der im Adressen-Signalkanal-Umsetzer U11/U12 gespeicherten Signalkanalnummern, die als Steuerinformationen fallweise aus jenem abgerufen und zur Steuerung des Wählers W1 zugeführt werden.

Es kann auch Betriebssituationen geben, in denen im zentralen Prozessor die aktuelle momentane Zuordnung einer an eine Anschlußeinheit außenseitig angeschlossenen Verbindungsleitung - bzw. einen entsprechenden Kanals - zu einer bestimmten Anschlußgruppe nicht eindeutig bekannt ist, z. B. während einer Umleitungsphase. Für diesen Fall ist vorgesehen, eine entsprechende Information und zwar ein und dieselbe Information vom zentralen Prozessor zugleich zu den beiden betreffenden Anschlußgruppen (LTG1 + LTG2) hin auszusenden, und zwar jeweils adressiert in der bereits angegebenen Weise. Diese Zuordnung ist aber in den Anschlußgruppen bekannt. Diejenige Anschlußgruppe, der diese Verbindungsleitung zugeordnet ist, gibt diese Information in der beschriebenen Weise weiter. Darüberhinaus ist vorgesehen, daß die andere Anschlußgruppe, in der erkannt wird, daß eine Information für eine Verbindungsleitung eingetroffen ist vom zentralen Prozessor, die dieser Anschlußgruppe momentan nicht zugeordnet ist, als irrelevant erkannt und deshalb verworfen wird. Diese Information wird deshalb von dieser anderen Anschlußgruppe nicht an eine Anschlußeinheit weitergeleitet, sondern gelöscht.

Wird nun eine Information samt der zu ihr gehörenden, aus erstem Adressenteil und zweitem Adressenteil bestehenden Adresse störungsbedingt zur Anschlußgruppe LTG1 geschickt, obwohl die betreffende Information für eine der Anschlußeinheiten 2DIU1 bis 2DIU4 bestimmt ist, so erkennt die dezentrale Steuereinrichtung GP1 anhand des ersten Adressenteils zunächst, daß die betreffende Information für eine Anschlußeinheit der jeweils anderen Anschlußgruppe bestimmt ist. Anhand des zweiten Adressenteils erkennt diese dezentrale Steuereinrichtung die jeweilige Anschlußeinheit, für die die Information bestimmt ist. Aufgrund des ersten Adressenteils und aufgrund des zweiten Adressenteils leitet die dezentrale Steuereinrichtung GP1 die betreffende Information zu derjenigen Anschlußeinheit der anderen Anschlußgruppe LTG2 weiter, für die sie bestimmt ist. Hierzu schaltet die dezentrale Steuereinrichtung GP1 einen Übertragungsweg über die Zeitmultiplex-Koppeleinrichtung GS1 durch, über den die Information dann übertragen wird. Dies erfolgt über einen entsprechenden Anschluß der Zeitmultiplex-Koppeleinrichtung GS1 und die Arbeitsseite des betreffenden Umschalters, zum Beispiel 2d2. Auch in diesem Falle kann die betreffende Information in der dezentralen Steuereinrichtung GP1 zwischengespeichert werden und dann von ihr aus zu der betreffenden Anschlußeinheit, zum Beispiel 2DIU2 hin übertragen werden, oder es kann in der oben beschriebenen Weise vorgesehen sein, daß auch in dem hier beschriebenen Betriebsfall ein Direktweg von dem über die Zeitmultiplexleitung L1/1 verlaufenden Signalkanal über die Zeitmultiplex-Koppeleinrichtung GS1 und über den in Arbeitslage befindlichen Umschalter 2d2 zur Anschlußeinrichtung 2DIU2 durchgeschaltet wird.

Auf die beschriebene Weise können sowohl Informationen vom zentralen Prozessor zu jeder der Anschlußeinheiten, als auch in umgekehrter Richtung übertragen werden. Im letzteren Falle kann die vom zentralen Prozessor zur betreffenden Anschlußeinheit übertragene Information eine Abrufinformation sein, aufgrund deren in umgekehrter Richtung dann die zu übertragende und abgerufene Information von der betreffenden Anschlußeinrichtung zum zentralen Prozessor hin übertragen wird. Auf die gleiche Weise kann auch die Informationsübertragung von Anschlußgruppe zu Anschlußgruppe erfolgen, wie sie in der deutschen Patentschrift 3128365 beschrieben ist. Auf diese Weise können also Informationen von einer Anschlußeinheit einer Anschlußgruppe zu einer Anschlußeinheit einer anderen Anschlußgruppe übertragen werden, wobei diese Informationen vom zentralen Prozessor ZW1 nicht selber aufgenommen werden müssen, sondern nach Ankunft von einer Anschlußeinheit in der Eingabe-Ausgabe-Einrichtung G1 von hier aus direkt zu der betreffenden Anschlußeinrichtung übertragen werden, für die sie bestimmt sind. Dies ist möglich durch die in der zuletzt angegebenen Patentschrift beschriebene Weiterleitung der Informationen innerhalb der Eingabe-Ausgabe-Einrichtung G1.

Bevor auf die erfindungsgemäßen Besonderheiten der beschriebenen Umschaltungen näher eingegangen wird, nimmt die Beschreibung erst noch auf die Doppelung von Prozessor und zentralem Koppelfeld bezug. Wie bereits aus dem bisherigen Teil der Beschreibung hervorgeht, ist ein der Verbindungsdurchschaltung dienendes zentrales Koppelfeld K1/K2 zweifach vorgesehen. Ebenso zweifach ist ein zentraler Prozessor ZW1/ZW2 vorgesehen, wobei das eine Koppelfeld, zum Beispiel K1 und der eine zentrale Prozessor, zum Beispiel ZW1, einander zugeordnet sind, was auch für das andere Koppelfeld und den anderen zentralen Prozessor gilt. Der zentrale Prozessor dient in bekannter Weise unter anderem der Steuerung seines zentralen Koppelfeldes sowie einer hierfür erforderlichen Schaltkennzeichenverarbeitung. Jeder der beiden Prozessoren ist in bekannter Weise programmgesteuert. Die Doppelung von Koppelfeld und zentralem Prozessor dient in bekannter Weise zur Ersatzschaltemöglichkeit (stand-by-Betrieb). Für den Fall einer Funktionsstörung und/oder eines schaltungstechnischen Fehlers in einem der beiden Koppelfelder und/oder in einem der beiden zentralen Prozessoren und/oder in einem von ihnen jeweils zugeordneten weiteren Aggregaten besteht in bekannter Weise die Möglichkeit, daß der Vermittlungsbetrieb statt mit dem einen zentralen Koppelfeld, zum Beispiel K1, und dem einen der beiden zentralen Prozessoren, zum Beispiel ZW1, vielmehr mit dem anderen der beiden Koppelfelder, zum Beispiel K2, und dem anderen der beiden zentralen Prozessoren, zum Beispiel ZW2 fortgesetzt wird - und umgekehrt -.

Ebenfalls wurde bereits erläutert - wie auch bereits durch die genannten Literaturstellen bekannt ist -, daß eine Mehrzahl von dezentralen Anschlußgruppen mit je einem Teilkoppelfeld zum außenseitigen Anschluß von Verbindungs- und/oder Teilnehmerleitungen, bzw. entsprechenden Kanälen, und mit einer dezentralen programmierbaren Steuereinrichtung zur Schaltkennzeichenaufnahme von diesen Leitungen, zur Schaltkennzeichenvorverarbeitung und -weiterleitung an den betreffenden zentralen Prozessor und zur Schaltkennzeichenaussendung auf die genannten Leitungen, bzw. Kanäle, ausgestattet ist. So weist zum Beispiel die Anschlußgruppe LTG1 das Teilkoppelfeld GS1 und die dezentrale Steuereinrichtung GP1 auf. An das Teilkoppelfeld GS1 sind außenseitig die Einrichtungen 1DIU1 bis 1DIU4 angeschlossen, die bereits weiter oben erwähnt wurden. Innenseitig sind an das Teilkoppelfeld die beiden Zeitmultiplexleitungen L1/1 und L1/2 (auch als "Linkleitungen" bezeichnet) angeschlossen, die zu den beiden zentralen Koppelfeldern K1 und K2 führen. Jede dieser Zeitmultiplexleitungen umfaßt - wie bereits ebenfalls weiter oben erläutert wurde - eine Anzahl von zum Beispiel dreißig Kanalpaaren, wobei jeweils ein Kanalpaar einen Übertragungskanal in der einen Übertragungsrichtung und einen Übertragungskanal in der anderen Übertragungsrichtung enthält. Jedes dieser Kanalpaare bildet eine Linkleitung. Folglich ist jedes Teilkoppelfeld, zum Beispiel GS1, über zwei Gruppen von Linkleitungen gruppenweise getrennt mit Koppelfeldanschlüssen einerseits des einen und andererseits des anderen der beiden parallel vorgesehenen Koppelfelder verbunden.

Ebenfalls wurde bereits erwähnt - was auch aus den weiter oben genannten Literaturstellen zu entnehmen ist -, daß für einen der Schaltkennzeichenbehandlung dienenden Datenaustausch zwischen den dezentralen Steuereinrichtungen einerseits und dem jeweils betriebsbereiten Prozessor andererseits Datenverbindungen in betriebsbereiten Zustand gebracht bzw. in ihm gehalten werden. Bei dieser Schaltkennzeichenbehandlung handelt es sich darum, daß von Teilnehmern abgegebene Wahlinformationen sowie über bereits aufgebaute oder teilaufgebaute Verbindungswege eintreffende Schaltkennzeichen, die über die dezentralen Anschlußgruppen eintreffen, dem jeweiligen zentralen Prozessor nach einer Vorverarbeitung in der jeweiligen dezentralen Steuereinrichtung zugeführt werden, wodurch dieser Einstellinformationen für sein zentrales Koppelfeld und Steuerinformationen erarbeitet sowie Schaltkennzeichen erarbeitet, die dem jeweiligen dezentralen Steuerwerk wieder zugeleitet werden. Diese Schaltkennzeichen kommen über die betreffenden Verbindungen zur Aussendung, und Steuerinformationen dienen u.a zur Anschaltung von Hörtonsignalen, Rufsignalen und dergleichen für die betreffenden Teilnehmer. Der für diese Schaltkennzeichenbehandlung dienende Datenaustausch zwischen jedem der dezentralen Steuerwerke einerseits und dem betreffenden zentralen Prozessor andererseits erfolgt über Datenverbindungen, die zwischen jeder der dezentralen Steuereinrichtungen einerseits über das jeweils in Betrieb befindliche zentrale Koppelfeld mit dem jeweils in Betrieb befindlichen Prozessor hergestellt und ständig in betriebsbereitem Zustand gehalten werden. Diese Datenverbindungen werden ähnlich wie Nachrichtenverbindungen über das zentrale Koppelfeld hergestellt. Sie verlaufen in der bereits angegebenen Weise über die Einrichtungen MB1 und G1, wenn zur Zeit das Koppelfeld K1 und der zentrale Prozessor ZW1 sich in Betrieb befinden.

Die genannten Datenverbindungen zwischen jeder der dezentralen Steuereinrichtungen jeder der Anschlußgruppen einerseits und dem jeweils in Betrieb befindlichen zentralen Prozessor dienen nicht nur für den genannten, zur Abwicklung der erwähnten Schaltkennzeichenbehandlung durchgeführten Datenaustausch, sondern diese Datenverbindungen dienen auch dazu, daß beim Inbetriebgehen eines zentralen Prozessors und des ihm zugeordneten zentralen Koppelfeldes dieser zentrale Prozessor Programm- und Vermittlungs-Software an sämtliche dezentralen Steuereinrichtungen sämtlicher Anschlußgruppen überträgt. Dies wird auch als "Laden" bezeichnet und ist in großer Ausführlichkeit in der bereits genannten Zeitschrift "telcom report", Beiheft 1981, insbesondere Seite 19 ff beschrieben. Hierzu ist im Falle des vorliegenden beschriebenen Ausführungsbeispiels eine mit dem zentralen Prozessor, zum Beispiel ZW1, verbundene Eingabe-Ausgabe-Einrichtung, zum Beispiel G1, vorgesehen, an die mehrere Daten-Pufferspeichereinrichtungen, zum Beispiel MB1, angeschlossen sind; von jeder derselben führt eine Mehrzahl von Datenverbindungen über das betreffende Koppelfeld, zum Beispiel K1, zu den dezentralen Steuereinrichtungen der genannten Anschlußgruppen. Diese Daten-Pufferspeicher sind mit Link-Anschlüssen einzeln mit Anschlüssen des Koppelfeldes fest verbunden. Wie bereits ausgeführt wurde, ist eine solche Verbindung und dementsprechend auch ein Link-Anschluß jeweils durch ein Kanalpaar realisiert. Die Kanalpaare gehören im übrigen zu den an das Koppelfeld K1 bzw. K2 angeschlossenen Zeitmultiplexleitungen.

Die für den Vermittlungsbetrieb erforderlichen und in den dezentralen Steuereinrichtungen zu speichernden vermittlungstechnischen Informationen, wie zum Beispiel Teilnehmeranschlußlage-Teilnehmerrufnummer-Zuordnungen, Teilnehmerberechtigungen und technischen Merkmale von angeschlossenen Verbindungsleitungen und dergleichen, sowie Programminformationen, die für die Abwicklung der vermittlungstechnischen Funktionen maßgebend sind, werden zunächst entsprechenden Speichern der beiden zentralen Prozessoren eingegeben und werden von hier aus beim Inbetriebgehen eines zentralen Prozessors zu den dezentralen Steuereinrichtungen der verschiedenen Anschlußgruppen übertragen und hier gespeichert. Diese Übertragung und Speicherung erfolgt pro Anschlußgruppe einzeln, das heißt für die dezentralen Steuereinrichtungen der verschiedenen Anschlußgruppen einzeln nacheinander. Der hierfür erforderliche Zeitaufwand bei Einschaltung einer Vermittlungsstelle ist im Vergleich zu den in Zusammenhang mit der Einrichtung einer Vermittlungsstelle erforderlichen gesamten Arbeiten verschwindend gering. Stärker fällt dieser Zeitaufwand jedoch ins Gewicht im Falle einer Ersatzschaltung des zentralen Prozessors und des zentralen Koppelfeldes. Für diesen Fall ist ebenso vorgesehen, die dezentralen Steuereinrichtungen der Anschlußgruppen mit den im zentralen Prozessor gespeicherten vermittlungstechnischen Informationen (Teilnehmeranschluß-Software) und/oder Programminformationen neu zu laden. Dies gewährleistet z. B. mit Sicherheit einen völligen Gleichlaut bzw. eine gänzliche Entsprechung für die Zusammenarbeit von Prozessor und Steuereinrichtung hinsichtlich dieser Informationen, die also einerseits im neu in Betrieb gehenden zentralen Prozessor und andererseits in den dezentralen Steuereinrichtungen gespeichert sind. Hierdurch werden jegliche Abweichungen ausgeschlossen, die sonst entstehen könnten bezüglich dieser vermittlungstechnischen Informationen und/oder dieser Programminformationen, die also einerseits im in Betrieb gehenden zentralen Prozessor und andererseits in den dezentralen Steuereinrichtungen jeder der verschiedenen Anschlußgruppen gespeichert sind. Solche Abweichungen können fehlerbedingt oder störungsbedingt oder auch zum Beispiel dadurch entstehen, daß zwischenzeitlich ganz gezielt Änderungen an diesen vermittlungstechnischen Informationen und/oder Programminformationen vorgenommen werden. Durch ein erneutes Laden sämtlicher dezentraler Steuereinrichtungen mit den Programminformationen und den vermittlungstechnischen Informationen seitens des in Zusammenhang mit der vorgesehenen Ersatzschaltung neu in Betrieb gehenden zentralen Prozessors werden solche Abweichungen mit Sicherheit ausgeschlossen; ebenso lassen sich auf diese Weise gezielte Änderungen hinsichtlich dieser Informationen und Programminformationen durchführen.

Nicht nur einer Vermeidung eines Ausfalles einer durch ein PCM-Übertragungssystem gegebenen Verkehrsrichtung (wie oben beschrieben) sondern auch dem weiteren Zweck, nämlich den Vorgang des beschriebenen Ladens der Programminformationen und der vermittlungstechnischen Informationen aus dem in Zusammenhang mit einer vorgesehenen Ersatzschaltung neu in Betrieb gehenden zentralen Prozessor - bzw. aus dem betreffenden Speicher desselben in die dezentralen Steuereinrichtungen der verschiedenen Anschlußgruppen - zeitlich abzukürzen, dient die bereits erwähnte Maßnahme, daß jeweils zwei Anschlußgruppen paarweise einander zugeordnet sind und daß in jeder derselben zum außenseitigen Anschluß von Teilnehmer- und/oder Verbindungsleitungen dienenden und innerhalb der jeweiligen Anschlußgruppe im Normalbetrieb mit ihrem Teilkoppelfeld verbundene Anschlußeinheiten im Notbetrieb oder im Quasi-Notbetrieb (Vorbereitung auf eine Prozessor-Ersatzschaltung) in der beschriebenen Weise umschaltbar sind. Es wird also Gebrauch gemacht von der bereits weiter oben im einzelnen beschriebenen technischen Verfahrensweise, wobei die erläuterte Umschaltung vom Normalbetrieb auf den Notbetrieb nicht nur bei einem Paar von Anschlußgruppen sondern (im Quasi-Notbetrieb zur Vorbereitung auf eine Prozessor-Ersatzschaltung) auch ggfs. bei sämtlichen Anschlußgruppen in die Wege geleitet werden kann. Dabei werden die Anschlußeinheiten jeweils einer von zwei paarweise einander zugeordneten Anschlußgruppen zusätzlich an das Teilkoppelfeld der jeweils anderen, also jeweils einer Partner-Anschlußgruppe angeschaltet, was bei sämtlichen paarweise einander zugeordneten Anschlußgruppen gleichermaßen stattfindet. Ferner wird für die über die umgeschalteten Anschlußeinheiten verlaufenden Verbindungen die entsprechende Schaltkennzeichenbearbeitung sowie Teilkoppelfeld-Einstellung ebenfalls von der dezentralen Steuereinrichtung jeweils der Partner-Anschlußgruppe durchgeführt.

In dieser Betriebssituation bedient also innerhalb von zwei paarweise einander zugeordneten Anschlußgruppen die dezentrale Steuereinrichtung nur einer derselben sämtliche Anschlußeinheiten, wie zum Beispiel Teilnehmeranschlußschaltungen, Mehrfachteilnehmeranschlußschaltungen, Verbindungsleitungsabschlußschaltungen, die auch Verbindungsleitungsmehrfachabschlußschaltungen sein können und dergleichen. Auch werden sämtliche Verbindungen, die über die Anschlußeinheiten beider Anschlußgruppen hergestellt werden, über das Teilkoppelfeld nur der einen der beiden Anschlußgruppen von dieser einen Steuereinrichtung durchgeschaltet. Ausgehend davon, daß in dieser Betriebssituation die Anschlußeinheiten jeweils der einen dieser beiden Anschlußgruppen zusätzlich an das Teilkoppelfeld der jeweils anderen Anschlußgruppe angeschaltet werden, erfolgt also die gesamte Verbindungsherstellung über das Teilkoppelfeld der letzteren Anschlußgruppe mit Hilfe von ihrer dezentralen Steuereinrichtung. Dabei sind die beiden Anschlußgruppen an sich völlig gleichberechtigt, das heißt diese Umschaltung kann bezüglich dieser beiden Anschlußgruppen auch umgekehrt erfolgen. Die gesamte weitere Betriebsabwicklung erfolgt dann vorläufig in der gleichen Weise, wie in dem weiter oben detailliert beschriebenen Notbetrieb. In dieser Betriebssituation befinden sich sämtliche Anschlußgruppen gleichsam im Notbetrieb.

Nach Herstellung des Notbetriebszustandes ist die Hälfte sämtlicher dezentraler Steuereinrichtungen dem Vermittlungsbetrieb entzogen, ebenso auch die Hälfte sämtlicher Teilkoppelfelder, und zwar jeweils eine dezentrale Steuereinrichtung und jeweils das ihm zugeordnete Teilkoppelfeld pro Paar von Anschlußgruppen.

Eine Ersatzschaltung eines der beiden zentralen Prozessoren durch den jeweils anderen zentralen Prozessor wird also noch während zunächst weiterlaufendem Betrieb des bis dahin in Betrieb befindlichen zentralen Prozessors dadurch vorbereitet, daß sämtliche einander paarweise zugeordneten Anschlußgruppen vom Normalbetrieb in den Notbetrieb übergeführt werden; ferner stellt der andere zentrale Prozessor Datenverbindungen über das ihm zugeordnete andere zentrale Koppelfeld zu den dezentralen Steuereinrichtungen aller ersten (s.o.!) Anschlußgruppen her. Dies geschieht in der weiter oben bereits beschriebenen Weise. Diese Verbindungen werden also zu den dezentralen Steuereinrichtungen aller derjenigen Anschlußgruppen hergestellt, deren Anschlußeinheiten jeweils zum Teilkoppelfeld der paarweise zugeordneten anderen Anschlußeinheit umgeschaltet worden sind, also derjenigen Anschlußgruppen, deren dezentrale Steuereinrichtungen und deren Teilkoppelfelder in Zusammenhang mit der in Vorbereitung befindlichen Ersatzschaltung dem normalen Vermittlungsbetrieb entzogen worden sind.

Über die zuvor beschriebenen neu hergestellten Datenverbindungen lädt nun der in Zusammenhang mit der bevorstehenden Ersatzschaltung neu in Betrieb gehende zentrale Prozessor die gesamten Programminformationen und die gesamten vermittlungstechnischen Informationen in die betreffenden dezentralen Steuereinrichtungen, bzw. in entsprechende Speicher derselben. Dieser zentrale Prozessor überträgt also anschließend nacheinander an die betreffenden dezentralen Steuereinrichtungen, die zur Zeit dem regulären Vermittlungsbetrieb entzogen sind, die für ihren erneuten Betriebsbeginn erforderliche Programm- und Vermittlungs-Software zwecks Speicherung derselben in ihnen. Dies geschieht seitens des in Zusammenhang mit der bevorstehenden Ersatzschaltung in Betrieb gehenden zentralen Prozessors bereits vorbereitend während einer Übergangszeit, in der der andere zentrale Prozessor noch den Vermittlungsbetrieb mit denjenigen dezentralen Steuereinrichtungen und Teilkoppelfeldern fortführt, die hierzu vom Normalbetrieb in den Notbetrieb übergeführt worden sind zwecks Vorbereitung der beabsichtigten Ersatzschaltung.

Sind die zuvor beschriebenen, eine Prozessor-Ersatzschaltung vorbereitenden Vorgänge des Ladens von Programminformationen und vermittlungstechnischen Informationen abgewickelt, so erfolgt die Ersatzschaltung. Dabei geht in bekannter Weise die Gesamtheit der zentralen Datenverarbeitungs- und Steuerfunktionen von dem einen zentralen Prozessor auf den anderen zentralen Prozessor über, wobei auch das eine zentrale Koppelfeld durch das andere zentrale Koppelfeld ersetzt wird. Dabei werden die Umschalter LH1 und LHL betätigt, d. h. aus ihrer dargestellten Ruhelage in ihre Arbeitslage gebracht, wodurch die Umschaltung von dem einen zentralen Koppelfeld zu dem anderen vollzogen wird. Es ist hierbei vorgesehen, daß bereits bestehende Verbindungen bestehen bleiben bis zu ihrer Auslösung. Sämtliche neue Verbindungen werden dann mit Hilfe der neu geladenen dezentralen Steuereinrichtungen hergestellt, und zwar über die ihnen jeweils entsprechenden Teilkoppelfelder. Die anderen dezentralen Steuereinrichtungen und die ihnen zugeordneten Teilkoppelfelder werden für weitere Verbindungsherstellungen vorübergehend nicht mehr benutzt.

In diesem Zusammenhang, nämlich dem Vollzug der Ersatzschaltung, erfolgt ferner eine erneute Umschaltung innerhalb der Anschlußgruppen, und zwar nunmehr innerhalb sämtlicher Anschlußgruppen mit Hilfe der in Figur 2 dargestellten Umschaltekontakte 1d1 bis 2d4. Von diesen kehren die Umschalter 2d1 bis 2d4, die - wie oben beschrieben - bei Beginn der Notbetriebs-Situation von ihrer Ruhelage in ihre Arbeitslage gebracht worden waren, nun in ihre Ruhelage wieder zurück, wohingegen die Umschalter 1d1 bis 1d4 aus ihrer Ruhelage in die Arbeitslage gebracht werden. Anschließend wird der Vermittlungsbetrieb also fortgesetzt mit Hilfe derjenigen dezentralen Steuereinrichtungen, die bis zur erfolgten Ersatzschaltung dem normalen Vermittlungsbetrieb entzogen waren, sowie über die zugeordneten Teilkoppelfelder. Diejenigen dezentralen Steuereinrichtungen und zugeordneten Teilkoppelfelder, die bis zum Zeitpunkt der Ersatzschaltung den Vermittlungsbetrieb im Notbetrieb oder im Quasi-Notbetrieb fortgeführt haben, gehen dann zunächst außer Betrieb. Dann aber baut derjenige zentrale Prozessor, der in Zusammenhang mit der Ersatzschaltung in Betrieb gegangen ist, nacheinander auch Datenverbindungen zu allen diesen dezentralen Steuereinrichtungen auf, die im Zeitpunkt der erfolgten Ersatzschaltung zunächst außer Betrieb gegangen sind. Anschließend lädt der zentrale Prozessor die erforderlichen Programminformationen und vermittlungstechnischen Informationen auch in die Speicher dieser dezentralen Steuereinrichtungen. Dies geschieht zeitlich eingestreut in die normalen Vermittlungsvorgänge. Nachdem der dezentrale Prozessor sämtliche dieser dezentralen Steuereinrichtungen mit den erforderlichen Programminformationen und den betreffenden vermittlungstechnischen Informationen geladen hat, wird sukzessive nacheinander bei den paarweise einander zugeordneten Anschlußgruppen die Betriebsweise wieder vom Notbetrieb in den Normalbetrieb zurücküberführt, in dem nun auch die Umschalter 1d1 bis 1d4 wieder in ihre Ruhelage zurückgestellt werden.

Nachdem die Beschreibung des in den Zeichnungen auszugsweise dargestellten Ausführungsbeispieles der Erfindung eine Zeitmultiplex-Fernsprechvermittlungsanlage, in der die Erfindung angewendet ist, im wesentlichen in allgemeineren Zusammenhängen beschrieben hat, wendet sie sich nun den für die Erfindung wesentlichen Zusammenhängen in besonderer Weise zu, die die Umschaltungen der Anschlußeinrichtungen der Anschlußgruppen und ihrer Internleitungen zum Teilkoppelfeld der jeweiligen Partner-Anschlußgruppe betreffen. Von besonderer Bedeutung hierfür ist die Art und Weise, wie diese Umschaltungen mittels der Umschalter 1d1 bis 4d2 (und gegebenenfalls auch mittels der Umschalter u11 bis u22, s.u.!) durchgeführt werden, nämlich verbindungsindividuell. Sie können dem Zweck dienen, in der oben beschriebenen Weise den Ausfall einer Verkehrsrichtung zu vermeiden in dem Fall, daß von einem eine Verkehrsrichtung repräsentierenden PCM-Übertragungssystem keiner seiner Kanäle - bedingt durch eine Störung in der betreffenden Anschlußgruppe - mehr belegbar ist. In diesem Fall können die Umschaltungen beschränkt sein auf ein einziges Paar von einander zugeordneten Anschlußgruppen. Diese Umschaltungen können aber auch hinsichtlich der Anzahl von beteiligten Anschlußgruppen größeren Umfang haben, insbesondere alle Anschlußgruppen betreffen. Dies gilt vorzugsweise für den Prozessor-Ersatzschalte-Fall.

Wie bereits ausgeführt wurde, ist zur Vorbereitung eines Ersatzschaltevorganges vorgesehen, daß von demjenigen zentralen Prozessor, z.B. dem zentralen Prozessor ZW2, der beim Ersatzschaltevorgang die zentralen Prozessorfunktionen anstelle des anderen zentralen Prozessors, z.B. ZW1, übernimmt, über das dem hierbei diese Funktionen übernehmenden zentralen Prozessor, z.B. ZW2, zugeordnete zentrale Koppelfeld, z.B. K2, einzeln Datenverbindungen zu den dezentralen Steuereinrichtungen, z. B. GP2, aller derjenigen Anschlußgruppen, z. B. LTG 2, durchgeschaltet werden, also in betriebsbereiten Zustand gebracht werden, bei denen mit Hilfe der Umschalter, z. B. 2d1 bis 2d4 (s.o.!), die zugehörigen Anschlußeinheiten, z. B. 2 DIU1 bis 2DIU4, vom Teilkoppelfeld z. B. GS2, dieser Anschlußgruppe, z. B. LTG 2, zum Teilkoppelfeld, z. B. GS1, der anderen Anschlußgruppe, z. B. LTG1, umgeschaltet worden waren. Eine solche Umschaltung kann also sowohl zur Vorbereitung eines störungsbedingten Notbetriebes der weiter oben beschriebenen Art vorgenommen werden, also lediglich für jeweils nur ein einziges Anschlußgruppen-Paar (LTG1/LTG2), als auch für die Gesamtheit der vorhandenen Anschlußgruppen-Paare zugleich, und zwar zum Zwecke der Vorbereitung der zuvor bereits ausführlich beschriebenen Ersatzschaltung eines der zentralen Prozessoren durch den jeweils anderen zentralen Prozessor. Wie oben bereits ebenfalls ausgeführt wurde, werden bei einer solchen Ersatzschaltung auch die Umschalter LH1, LH2, LG1 und LG2 betätigt. Ist der zentrale Prozessor ZW1 in Betrieb, so befinden sich diese Umschalter in ihrer in Fig. 2 dargestellten Lage. Ist der zentrale Prozessor ZW2 in Betrieb, so werden im Zusammenhang hiermit die zuletzt genannten Umschalter in ihre jeweils andere Schaltstellung gebracht. Dadurch wird erreicht, daß die Teilkoppelfelder GS1 und GS2 anstatt mit dem Zentralkoppelfeld K1 mit dem Zentralkoppelfeld K2 verbunden sind.

Die beschriebene Umschaltung kann unter anderem also Anschlußeinheiten, z.B. 2DIU1 bis 2DIU4, einer Anschlußgruppe betreffen, z.B. LTG2, in deren Teilkoppelfeld, z.B. GS2, oder dezentralem Steuerwerk, z.B. GP2, oder an anderer Stelle eine Betriebsstörung eingetreten ist, kann aber auch sämtliche Anschlußgruppen im Prozessor-Ersatzschaltefall betreffen. Insoweit wirkt sich diese Umschaltung also auf die Verbindungswege, in FIG mit Li11 bis Li 24 bezeichnet, zwischen den Anschlußeinheiten und den außenseitigen Teilkoppelfeldanschlüssen aus. Diese Umschaltung kann darüber hinaus aber auch für die innenseitigen Teilkoppelfeldanschlüsse vorgesehen werden. Im Zusammenhang mit einer solchen Umschaltung werden zusätzlich mit Hilfe der Umschalter u11, u12, u21 und u22 auch die Verbindungen zwischen den Teilkoppelfeldern GS1 und GS2 einerseits und den Zeitmultiplexleitungen L1/1 bis L2/2 andererseits in der aus der Zeichnung ersichtlichen Weise umgeschaltet. Diese letztgenannten Umschalter sind in Fig. 2 in derjenigen Schaltstellung dargestellt, die sie im Normalbetrieb einnehmen. Wenn die Umschalter 2d1 bis 2d4 betätigt werden und sie die Anschlußeinheiten 2DIU1 bis 2DIU4 von den Außenanschlüssen des Teilkoppelfeldes GS2 abtrennen und mit den Außenanschlüssen des Teilkoppelfeldes GS1 verbinden, sind für den zuvor erwähnten Fall, daß auch für die innenseitigen Koppelfeldanschlüsse eine Umschaltung vorgesehen ist, auch die Umschalter u21 und u22 vorgesehen. Sie werden in der Anschlußgruppe LTG2 dann ebenfalls betätigt. Dadurch wird von den Zeitmultiplexleitungen L2/1 und L2/2, die zu der Anschlußgruppe LTG2 führen, in der zu dieser Anschlußgruppe gehörenden Zeitmultiplex-Abschlußschaltung LU2 die Zeitmultiplexleitung, z. B. L2/1, die zu dem jeweils in Betrieb befindlichen Prozessor, z.B. ZW1, führt, mit der Wirkung umgeschaltet, daß diese Zeitmultiplexleitung (L2/1) nunmehr statt mit dem Teilkoppelfeld GS2 (über u21-Ruheseite und LH2-Ruheseite) vielmehr mit dem Teilkoppelfeld GS1 (über u21-Arbeitsseite und LG1-Ruheseite) verbunden ist, wobei in diesem Betriebsfall mit Hilfe des weiteren Umschalters LG1 festgelegt ist, ob diese umgeschaltete Verbindung als eine Zeitmultiplexverbindung zum Zentralkoppelfeld K1 oder zum Zentralkoppelfeld K2 zur Wirkung kommt, in der soeben angesprochenen Betriebssituation also eine Verbindung zum Zentralkoppelfeld K1.

Wird also ein Teilkoppelfeld umgeschaltet, so betrifft dies nur ihre außenseitigen Teilkoppelfeldanschlüsse, oder auch - im Falle des letztbeschriebenen Beispiels - ihre innenseitigen Teilkoppelfeldanschlüsse. Durch eine Umschaltung in einer Anschlußgruppe, z.B. LTG2, werden dann sowohl ihre Anschlußeinheiten, z.B. 2DIU1 bis 2DIU4, als auch ihre Zeitmultiplex-Anschlußleitungen, z.B. L2/1 und L2/2, von dem Teilkoppelfeld, z.B. GS2, der betreffenden Anschlußgruppe, z.B. LTG2, zum Teilkoppelfeld, z.B. GS1, der jeweiligen Partner-Anschlußgruppe, z.B. LTG1 umgeschaltet. Diese Umschaltung kann in einem Störungsfall zwecks Unwirksammachens der betreffenden Störung in einem einzigen Anschlußgruppen-Paar für eine seiner beiden Anschlußgruppen oder ebenso bei mehreren störungsbetroffenen Anschlußgruppen vorgenommen werden, oder zwecks Vorbereitung obiger Prozessor-Ersatzschaltung auch zugleich bei allen Anschlußgruppen-Paaren. Allerdings besteht auch die Möglichkeit, die Fernsprechvermittlungsanlage so auszubilden, daß eine Umschaltung nur die Anschlußeinrichtungen betrifft (s.o.!), also nur deren Verbindung mit dem Teilkoppelfeld der eigenen Anschlußgruppe oder demjenigen der jeweiligen Partner-Anschlußgruppe, nicht aber die Verbindungen der innenseitigen Teilkoppelfeldanschlüsse mit den Zeitmultiplex-Anschlußleitungen L1/1 bis L2/2. In diesem Fall wird der Verkehr, der über die jeweils umgeschalteten Anschlußeinrichtungen z.B. 2DIU1 bis 2DIU4 abgewickelt wird, zusätzlich über die Zeitmultiplex-Anschlußleitungen, z.B. L1/1 derjenigen Anschlußgruppe, z.B. LTG1, geleitet, zu deren Teilkoppelfeld, z.B. GS1, diese Umschaltung erfolgt ist. In diesem Falle ist es zweckmäßig, die Zeitmultiplex-Anschlußleitungen sowie die Teilkoppelfelder hinsichtlich Anzahl von Kanälen und Durchschaltemöglichkeiten so zu bemessen, daß der für eine Anschlußgruppe umschaltungsbedingt zusätzliche Verkehr bewältigt werden kann.

Betrifft die Umschaltung aber - wie davor angegeben und wie in Fig. 2 dargestellt - auch die Zeitmultiplex-Anschlußleitungen L1/1 bis L2/2, so ist es zweckmäßig, die Teilkoppelfelder so zu bemessen, daß darin genügend Durchschaltewege vorhanden sind, d.h. auch in der Umschaltungs-Betriebssituation.

Wie aus den Figuren 1 und 2 der Zeichnung weiterhin ersichtlich ist, ist einer jeden der dezentralen Steuereinrichtungen GP1 und GP2 je ein Verbindungsdatenspeicher GR1 und GR2 individuell zugeordnet. Außerdem ist einer jeden dieser Steuereinrichtungen je eine Sende- und Empfangseinrichtung GA1 bzw. GA2 individuell zugeordnet. Diese sind über einen dezentralen Datenübertragungsweg GL1/2 miteinander verbunden. Hierüber können die beiden dezentralen Steuereinrichtungen gegenseitig Verbindungsdaten mit Hilfe der genannten Sende- und Empfangseinrichtungen übertragen. Diese können zusätzlich auch die Aufgabe einer Zwischenspeicherung im Zusammenhang mit dem jeweiligen Übertragungsvorgang haben.

Es ist nun vorgesehen, daß jede dezentrale Steuereinrichtung in ihrem Verbindungsdatenspeicher Verbindungsdaten über jede bestehende von Teilnehmerstelle zu Teilnehmerstelle durchgeschaltete Verbindung speichert. Es ist vorgesehen werden, daß auch Verbindungsdaten solcher Verbindungen gespeichert werden, die sich noch im Stadium des Verbindungsaufbaues befinden, oder lediglich auch solcher Verbindungen, die bereits von Teilnehmerstelle zu Teilnehmerstelle durchgeschaltet worden sind, bei denen sich der jeweils angerufene Teilnehmer jedoch noch nicht gemeldet hat.

Die Verbindungsdaten, die in den Verbindungsdatenspeichern gespeichert werden, geben bzgl. der über das zugeordnete Teilkoppelfeld bestehenden individuellen Verbindungen an, welcher außenseitige Teilkoppelfeldanschluß mit welchem innenseitigen Teilkoppelfeldanschluß verbunden ist. Das "zugeordnete" Teilkoppelfeld ist also jeweils dasjenige, welches zu derselben Anschlußgruppe gehört, wie die betreffende dezentrale Steuereinrichtung und ihr Verbindungsdatenspeicher. Da eine von einer Teilnehmerstelle zu einer anderen Teilnehmerstelle durchgeschaltete Verbindung immer ein Teilkoppelfeld, i.d.R. auch das jeweilige Zentralkoppelfeld und erneut ein Teilkoppelfeld durchläuft, gehören zu einer von einer Teilnehmerstelle zu einer anderen Teilnehmerstelle durchgeschalteten Verbindung also immer zwei Verbindungen jeweils innerhalb eines oder je eines Teilkoppelfeldes. Diese Verbindungen können auch als "Teilverbindungen" bezeichnet werden. Es ist also vorgesehen, daß im normalen Vermittlungsbetrieb in jeder Anschlußgruppe die Verbindungsdaten derjenigen Verbindungen gespeichert sind, die über das jeweilige Teilkoppelfeld verlaufen.

Weiterhin ist vorgesehen, daß die dezentralen Steuereinrichtungen, die zu einem Paar von Anschlußgruppen gehören, einander gegenseitig die Verbindungsdaten aller neu durchgeschalteten Verbindungen übertragen. Die Verbindungsdaten aller Verbindungen, die also z.B. über das Teilkoppelfeld GS2 durchgeschaltet werden, überträgt dann die dezentrale Steuereinrichtung GP2 aus ihrem Verbindungsdatenspeicher GR2 zur dezentralen Steuereinrichtung GP1 und umgekehrt. Letztere speichert nun die von ihrer Partner-Steuereinrichtung empfangenen Verbindungsdaten ebenfalls in ihrem jeweiligen Verbindungsdatenspeicher, und darüber hinaus schaltet jede dezentrale Steuereinrichtung anhand der jeweils von ihrer Partner-Steuereinrichtung empfangenen Verbindungsdaten zusätzlich Verbindungen ("Teilverbindungen", s.o.!) innerhalb desjenigen Teilkoppelfeldes durch, das mit ihr zur gleichen Anschlußgruppe gehört.

In diesem Zusammenhang kann vorgesehen werden, daß die Verbindungsdaten von jeder der beiden dezentralen Steuereinrichtungen im laufenden Vermittlungsbetrieb zur jeweiligen Partner-Steuereinrichtung übertragen werden, und daß jede der beiden dezentralen Steuereinrichtungen aufgrund dieser Verbindungsdaten laufend die betreffenden Teilverbindungen herstellt. Ebenso aber kann auch vorgesehen werden, daß jede der beiden dezentralen Steuereinrichtungen für sich die das ihr jeweils zugeordnete Teilkoppelfeld betreffenden Verbindungsdaten speichert, und daß diese laufend von jeder der beiden dezentralen Steuereinrichtungen jeweils zu ihrer Partner-Steuereinrichtung übertragen werden, und daß jede der beiden dezentralen Steuereinrichtungen aufgrund dieser gespeicherten, übertragenen Verbindungsdaten und aufgrund eines Umschaltungs-Vorbereitungskennzeichens die betreffenden Teilverbindungen herstellt.

Auf diese Weise können also bereits im normalen Vermittlungsbetrieb in jedem Teilkoppelfeld sowohl Teilverbindungen hergestellt werden, über die von Teilnehmerstelle zu Teilnehmerstelle durchgeschaltete Verbindungen, über welche die betreffenden Teilnehmer kommunizieren, geführt sind, als auch Teilverbindungen zwischen außenseitigen und innenseitigen Teilkoppelfeldanschlüssen, die im normalen Vermittlungsbetrieb noch unbenutzt sind. Diese Verbindungen verlaufen von außenseitigen Teilkoppelfeldanschlüssen, z.B. des Teilkoppelfeldes GS1, die in der jeweils anderen Anschlußgruppe, z.B. LTG2, über Internleitungen, z.B. Li, mit den Arbeitsseiten der betreffenden Umschalter, z.B. 2d1 bis 2d4, verbunden sind, zu innenseitigen Teilkoppelfeldanschlüssen, die über die Umschalter LG1 bzw. LG2 mit den Arbeitsseiten der Umschalter u21 und u22 bzw. u11 und u12 verbunden sind. Alle diese Umschalter sind zweckmäßig als elektronisch arbeitende Schalter in an sich bekannter Weise ausgebildet.

Wird nun von einer Anschlußgruppe die dezentrale Steuereinrichtung und das Teilkoppelfeld außer Betrieb genommen, so werden im Zuge der dies bewerkstelligenden Umschaltung die Anschlußeinheiten dieser Anschlußgruppe, z. B. 2DIU1 bis 2DIU4, und gegebenenfalls auch die Zeitmultiplex-Anschlußleitungen, z.B. L2/1 und L2/2, die von dieser Anschlußgruppe zum zentralen (gedoppelten) Koppelfeld führen, mit Hilfe der beschriebenen Umschalter, z.B. 2d1 bis 2d4 und gegebenenfalls auch u21 und u22, zum Teilkoppelfeld der jeweiligen Partner-Anschlußgruppe umgeschaltet. Da in diesem Zusammenhang in der weiter oben beschriebenen Weise hierbei vorgesehen ist, daß zwischen außenseitigen und innenseitigen Teilkoppelfeldanschlüssen bereits die zuvor beschriebenen Teilkoppelfeldverbindungen, ("Teilverbindungen" s.o. !) die bis dahin unbenutzt waren, vorbereitend hergestellt sind, wird hierdurch erreicht, daß im Zuge einer Umschaltung der zuletzt beschriebenen Art Verbindungen, die von Teilnehmerstelle zu Teilnehmerstelle bereits durchgeschaltet sind, nicht unterbrochen werden müssen. Hierzu werden also im normalen Vermittlungsbetrieb von jeder der beiden dezentralen Steuereinrichtungen, die zu einem Paar von Anschlußgruppen gehören, über dezentrale, den Anschlußgruppen-Paaren jeweils individuelle Übertragungswege Verbindungsdaten an die jeweils entsprechende Partner-Steuereinrichtung übertragen. Jede der beiden dezentralen Steuereinrichtungen baut anhand dieser übertragenen und jeweils von ihr empfangenen Verbindungsdaten Verbindungen über das Teilkoppelfeld der jeweils zugeordneten Anschlußgruppe auf, und zwar zu außenseitigen Teilkoppelfeldanschlüssen, mit denen bei einer Umchaltung die Anschlußeinheiten einer ersten Anschlußgruppe zu dem Teilkoppelfeld einer zweiten Anschlußgruppe der jeweiligen Partner-Anschlußgruppe durch die Umschaltung verbindbar sind.

Die besonders wesentlichen Merkmale des hier beschriebenen Ausführungsbeispieles betreffen die verschiedenen Vorgänge der Umschaltung der Anschlußeinrichtung jeweils einer Anschlußgruppe oder - wie erläutert - einer Vielzahl von Anschlußgruppen, insbesondere jeder zweiten Anschlußgruppe. Dafür ist von besonderer Bedeutung, daß im Aufbau befindliche Verbindungen, die von einer Umschaltung betroffen werden, nicht abgebrochen werden müssen. Dieser Aufbau erstreckt sich insgesamt vom Zeitpunkt des Abnehmens des Handapparates an der Teilnehmerstation eines rufenden Teilnehmers (Schließung der betreffenden Teilnehmerleitungsschleife) bis zum Melden des jeweils angewählten Teilnehmers. Da an diesem Aufbau die Teilsteuerwerke der von der neuen Verbindung jeweils durchlaufenen Anschlußgruppen sowie der zentrale Prozessor beteiligt sind, und da dabei zwischen diesen verschiedene Datenaustausch- und Steuerungsvorgänge ablaufen, dürfen selbige bei einer Umschaltung nicht gestört werden. Deshalb kann vorgesehen werden, daß die von einer Anschlußeinrichtung, z. B. 1DIU1, innerhalb einer Anschlußgruppe, z. B. LTG1, zu ihrem Teilkoppelfeld, z.B. GS1, führenden anschlußgruppeninternen Internleitungen, z.B. Li11, innerhalb einer Umleitungsphase einzeln, d.h. verbindungsindividuell zum Teilkoppelfeld, z. B. GS2, der jeweils anderen Anschlußgruppe, z. B. LTG2, umschaltbar sind. Hierzu sind, wie weiter oben ausgeführt, die genannten Umschalter 1d1 bis 2d4 als elektronisch wirkende Schalter ausgebildet.

Wie ebenfalls weiter oben ausgeführt wurde, sind die Leitungen L1/1 bis L2/2 Zeitmultiplex-Anschlußleitungen. Hierauf ist die Erfindung aber nicht beschränkt, sondern sie ist auch auf eine Fernsprechvermittlungsanlage anwendbar, bei der alle Leitungen und alle Durchschaltewege in den Teilkoppelfeldern, zum Beispiel GS1, sowie im zentralen Koppelfeld, zum Beispiel K1, nach dem Raumvielfachprinzip verwirklicht sind.- Da nun - wie zuvor angegeben - unter anderem vorgesehen ist, daß die von einer Anschlußeinrichtung innerhalb einer Anschlußgruppe zu ihrem Teilkoppelfeld führenden anschlußgruppeninternen Internleitungen Li11 bis Li24 innerhalb einer Umleitungsphase einzeln, d.h. verbindungsindividuell zum Teilkoppelfeld der jeweils anderen Anschlußgruppe umschaltbar sind, betrifft dies sowohl den zuletzt angegebenen Anwendungsfall einer Fernsprechvermittlungsanlage nach dem Raumvielfachprinzip, als auch den davor umfassend beschriebenen Anwendungsfall, nämlich daß die Vermittlungsanlage nach Zeitmultiplex-Prinzip in PCM-Technik realisiert ist. Was also hier in bezug auf die Internleitungen gesagt ist, gilt für verbindungsindividuelle Internleitungen nach dem Raummultiplex-Prinzip, sowie in entsprechender Weise für Zeitmultiplexkanäle, die immer gemeinsam zu mehreren über ein und denselben Übertragungsweg verlaufen, also ein gemeinsames Übertragungsmedium haben. Im letzteren Falle arbeiten die Umschalter 1d1 bis 2d4 und die Umschalter u11 bis u22 nach dem Zeitmultiplexprinzip, indem sie in bekannter Weise jeden der betreffenden Kanäle einzeln entweder umschalten oder vorerst noch unumgeschaltet belassen und umgekehrt. Diese Umschalter werden in an sich be kannter Weise durch das Teilsteuerwerk derjenigen Anschlußgruppe gesteuert, von der aus oder zu der hin die vorzunehmende Umschaltung erfolgt. Es kann also vorgesehen sein, daß diese Umschaltung kanalindividuell erfolgt, daß also die Umschalter kanalindividuell nach dem Zeitmultiplex-Prinzip gesteuert werden.

Weiterhin möge hierbei vorgesehen sein, daß innerhalb dieser Umleitungsphase die Durchführung von Umschaltungen auf diejenigen dieser Internleitungen, die unbelegt sind, bzw. die frei werden, z.B. durch Verbindungsauslösung, beschränkt ist, vorzugsweise auf diese sowie zusätzlich solche Internleitungen, bei denen die Verbindungsherstellungsvorgänge zwar abgewickelt sind bzw. abgewickelt worden sind, der jeweils gerufene Teilnehmer sich aber noch nicht gemeldet hat. Dadurch wird vermieden, daß Umschaltungen bei Verbindungen in ihrer jeweiligen Aufbauphase stattfinden. Hierbei besteht die Möglichkeit, die Vorgänge der Umschaltung generell gänzlich auf die unbelegten Internleitungen zu beschränken. Eine solche Betriebsweise bewirkt, daß außer im Aufbau befindlichen Verbindungen auch fertig durchgeschaltete Verbindungen von Umschaltungen unberührt bleiben. In diesem Falle erstreckt sich der gesamte Vorgang der Umschaltung auf eine Umschaltephase, die sich bis zu einem Zeitpunkt erstreckt, zu dem auch die letzte bei Beginn des Umschaltevorganges bereits bestehende oder erst im Aufbau befindliche Verbindung beendet ist, also vom betreffenden rufenden Teilnehmer wieder ausgelöst wird. Der Zeitbedarf für diese Umschaltephase kann abgekürzt werden, wenn in Kauf genommen wird, daß ein kleiner Prozentsatz von Langzeitverbindungen durch einen Abbruch in der Vermittlungsstelle zwangsweise einer Verbindungsauslösung unterworfen wird.

Es kann auch vorgesehen werden, in die Umschaltungen nicht nur die unbelegten, sondern auch diejenigen Verbindungen einzubeziehen, bei denen sich der gerufene Teilnehmer schon gemeldet hat. Dies verkürzt den Zeitbedarf für die Umschaltephase ganz erheblich.

Ebenso kann jedoch in dem hier beschriebenen Zusammenhang die Durchführung der Umschaltevorgänge auf die unbelegten sowie zusätzlich diejenigen Internleitungen beschränkt sein, bei denen die Verbindungsherstellungsvorgänge zwar schon abgewickelt sind, der jeweils gerufene Teilnehmer sich aber noch nicht gemeldet hat. Hierbei handelt es sich also um Verbindungen, die sich in der Ruf-Phase befinden. In diesem Falle erfolgt also nach Beginn einer Umschaltephase eine Umschaltung zunächst für alle unbelegten Internleitungen und danach für alle Internleitungen, die mit Verbindungen belegt sind, die bereits fertig durchgeschaltet sind, sowie solche, die sich in der Ruf-Phase befinden, oder in umgekehrter Reihenfolge oder ohne eine bestimmte Reihenfolge dieser Art. Während des weiteren Verlaufes der Umleitungsphase erfolgen weitere Umschaltungen für Internleitungen, die während einer über sie gerade stattfindenden Verbindungsherstellung jeweils frei werden (z.B. aufgrund plötzlicher Verbindungsauslösung durch den jeweils rufenden Teilnehmer), sowie für Internleitungen, über die Verbindungen aufgebaut worden sind, die in die Ruf-Phase eintreten. Umschaltungen werden dann also sowohl vorgenommen für Internleitungen, über die Verbindungen durchgeschaltet sind, die sich noch in der Ruf-Phase befinden, sowie Verbindungen, bei denen der Gerufene sich jeweils schon gemeldet hat, als auch für unbelegte und frei werdende Internleitungen. Diese Umschaltungen können sofort vorgenommen werden. Sie können auch überwiegend sofort, jedoch für im Aufbau befindliche Verbindungen sofort einzeln danach oder gesammelt danach am Ende der Umleitungsphase vorgenommen werden. Alle diese Umschaltungen jeweils in einer von zwei paarweise einander zugeordneten Anschlußgruppen werden von der dezentralen Steuereinrichtung der Anschlußgruppe, von der die Umschaltungen zur jeweiligen Partner-Anschlußgruppe erfolgen, gesteuert, oder von der dezentralen Steuereinrichtung der Partner-Anschlußgruppe.

Die Durchführung der Umschaltungen, z.B. in der Anschlußgruppe LTG2, erfolgt also mittels der dezentralen Steuereinrichtungen, z.B. GP1, in der Weise, daß die dezentrale Steuereinrichtung jeweils einer Anschlußgruppe die Umschaltung in der eigenen oder in der betreffenden anderen Anschlußgruppe durchführt. Hierzu sind entsprechende Steuerwege, z.B. Wy(oder entsprechende bei einer Steuerung der Umschaltungen durch die jeweils eigene dezentrale Steuiereinrichtung), zwischen einerseits jeder der dezentralen Steuereinrichtungen, z.B. GP1, jeder der Anschlußgruppen und andererseits den Umschaltern, z.B. 2d1 - 2d4, in der jeweils anderen Anschlußgruppe, z.B. GP2, vorgesehen. Über diese Steuerwege sind auch die weiteren dargestellten Umschalter u21 und u22, auch LG2 LH2 steuerbar. Sämtliche Verbindungswege können konventionell in Raummultiplextechnik aufgebaut sein, können jedoch auch in Zeitmultiplextechnik realisiert sein. In diesem Falle werden so, wie auch die Internleitungen Li11 bis Li24 ebenfalls die mit ihnen verbundenen Umschalter 1d1 bis 2d4 in an sich bekannter Weise zeitmultiplextechnisch in der Weise betrieben, daß entsprechende verbindungsindividuelle Kanäle einzeln, d.h. verbindungsindividuell in der beschriebenen Art und Weise umschaltbar sind.

Die Umschaltungen erfolgen in einer zeitlich begrenzten Umschaltephase. Die Zeit für eine Umschaltephase kann vorgegeben sein und kann mittels einer nichtgezeigten Zeitmeßeinrichtung begrenzt werden. Ist diese Zeit nicht in dieser Weise fest vorgegeben, und nicht mittels einer Zeitmeßeinrichtung begrenzt, so wird sie auf andere Weise begrenzt, und zwar dadurch, daß Verbindungen wählende Teilnehmer in ihrer Wähltätigkeit in an sich bekannter Weise übnerwacht werden. Teilnehmer, die zu lange warten mit Beginn der Wahl, oder zu lange Pausen machen zwischen Wählziffer und Wählziffer, erhalten Besetztzeichen, und ihr Verbindungsaufbau wird zwangsweise abgebrochen, wobei die eventuell teiweise bereits aufgebaute Verbindung wieder ausgelöst wird. Hierfür sind in an sich bekannter Weise zeitmessende Wahlüberwachungseinrichtungen in Fernsprechvermittlungsanlagen der hier beschriebenen Art vorgesehen.

Wie ausgeführt wurde, können die erläuterten Umschaltungen dem Zweck dienen, bei einer Betriebsstörung in einer Anschlußgruppe, z. B. an deren dezentraler Steuerung (GP) oder an deren Teilkoppelfeld (GS) oder auch an deren zum zentralen Koppelfeld führenden Zeitmultiplex-Anschlußleitungen (L1/1 bis L2/2), die in dieser Anschlußgruppe von ihren Anschlußeinrichtungen zu außenseitigen Teilkoppelfeldanschlüssen ihres Teilkoppelfeldes führenden anschlußgruppeninternen Internleitungen (Li...) - und damit diese Anschlußeinrichtungen selbst - von diesen Teilkoppelfeldanschlüssen auf diejenigen der jeweiligen Partner-Anschlußgruppe umzuschalten. Damit können Verbindungswege, die von anderen Vermittlungsstellen her kommen und mit diesen Anschlußeinrichtungen verbunden sind, weiter in Betrieb bleiben, indem für sie Durchschaltemöglichkeiten bereitgestellt sind, die über das Teilkoppelfeld der jeweiligen Partner-Anschlußgruppe bestehen. Dabei können auch - wie ebenfalls bereits dargelegt wurde - die Zeitmultiplex-Anschlußleitungen, z. B. L2/1 und L2/2 mit umgeschaltet werden mittels der Umschalter LG2 und LH2; dies ist natürlich nur sinnvoll, wenn die jeweils aufgetretene Betriebsstörung nicht in diesen Zeitmultiplex-Anschlußleitungen selbst liegt.

Wird eine Umschaltung also wegen einer Betriebsstörung in einer Anschlußgruppe vorgenommen, so sind den betreffenden Schaltmaßnahmen nur die beiden jeweils einander paarweise zugeordneten Anschlußgruppen unterworfen. Zunächst werden dabei die Internleitungen in der beschriebenen Weise gemäß dem Zeitmultiplex-Prinzip oder gemäß dem Raummultiplex-Prinzip verbindungsindividuell umgeschaltet. Ist die betreffende Betriebsstörung wieder behoben, so erfolgt eine Rück-Umschaltung der Internleitungen. Dies erfolgt zweckmäßig nach dem gleichen Regeln, wie sie weiter oben detailliert für die Umschaltevorgänge beim Eintreten einer Betriebsstörung erläutert wurden.

Wie weiterhin oben ausgeführt wurde, können die erläuterten Umschaltungen auch dem Zweck dienen, eine Prozessor-Ersatzschaltung vorzubereiten. In diesem Falle erfolgen zunächst Umschaltungen bei allen Paaren von Anschlußgruppen ebenfalls in der beschriebenen Weise.

Sind Umschaltungen auf diese Weise bei allen Anschlußgruppen erfolgt, und zwar zwecks Vorbereitung einer Ersatzschaltung, so arbeitet in jedem der Anschlußgruppen-Paare jeweils immer nur eine dezentrale Steuereinrichtung, z.B. GP1 und ein Teilkoppelfeld, z.B. GS1, für die Abwicklung des Vermittlungsbetriebes beider Anschlußgruppen. In dieser beispielsweisen Betriebssituation sind die Umschalter 2d1 bis 2d4 und u21 und u22 in ihrer Arbeitslage. Ferner war weiter oben angenommen worden, daß im Beispiels-Fall einer Prozessor-Ersatzschaltung der Vermittlungsbetrieb zunächst noch mit dem Zentralprozessor ZW1 weiterhin über das Zentralkoppelfeld K1 abgewickelt wird. Deshalb sind die Umschalter LH1, LH2, LG1, LG2 dann noch in ihrer dargestellten Ruhelage. In dieser Betriebssituation ist - wie sich aus Fig. 2 ergibt - als Ergebnis der erfolgten Umschaltung die Zeitmultiplexleitung L2/1 der Anschlußgruppe LTG2 über die Arbeitsseite des Umschalters u21 und die Ruheseite des Umschalters LG1 mit dem Teilkoppelfeld GS1 der Anschlußgruppe LTG1 verbunden.

Zusätzlich ist in dieser Betriebssituation die Zeitmultiplexleitung L2/2 über die Arbeitsseite des Umschalters u22 und die Ruheseite des Umschalters LH2 in der Zeitmultiplexabschlußschaltung LU2 mit dem Teilkoppelfeld GS2 derselben Anschlußgruppe verbunden und ist über dieses oder über eine direkt von dieser Zeitmultiplexabschlußschaltung herangeführte Leitung verbindbar mit der dezentralen Steuereinrichtung GP2. Über diesen Weg erfolgt in Vorbereitung für die bevorstehende, weiter oben bereits ausführlicher beschriebene Ersatzschaltung der Datenladevorgang für Programminformationen und vermittlungstechnische Informationen für diese Steuereinrichtungen.

Wie ausgeführt, erfolgt nach diesen Umschaltungen das Laden sämtlicher dem Vermittlungsbetrieb durch die Umschaltungen vorübergehend entzogener dezentralen Steuereinrichtungen, bzw. ein Laden von deren Speichern. Sind bei den Umschaltevorgängen - wie beschrieben - die Umschalter 2d1 bis 2d4 und u21 und u22 betätigt worden (verbindungsindividuell) und war bisher der Prozessor ZW1 in Betrieb, so besteht für die Steuereinrichtung GP2 der Informationsweg für dieses Laden über die Arbeitsseite des Umschalters u22 und die Ruheseite des Umschalters LH2 (s.o.!). Es werden nun analog zu der Gesamtheit der vermittlungstechnisch durchgeschalteten Verbindungen in den bis dahin in Betrieb befindlichen Anschlußgruppen (z. B. LTG1) und dem bis dahin in Betrieb befindlichen zentralen Koppelfeld (z. B. K1) vorbereitend parallel Verbindungen über das andere Koppelfeld (z. B. K2) und die anderen Anschlußgruppen (z. B. LTG2) aufgebaut, und zwar mittels deren dezentralen Steuereinrichtungen (z. B. GP2) sowie mittels des anderen Prozessors (z. B. ZW2).

Danach werden in jedem Paar von Anschlußgruppen die Umschalter, die bei den Umschaltevorgängen zuvor betätigt worden waren, z.B. 2d1 bis 2d4 und u21/u22, in ihre Ruhelage zurückgelegt, und die anderen Umschalter, z. B. 1d1 bis 1d4 und u11/u12 werden in ihre Arbeitslage gebracht. Dies erfolgt nach demselben zuvor beschriebenen Prinzip der verbindungsindividuellen Umschaltung der Internleitungen. Ebenfalls werden die Umschalter LH1, LG1, LHZ und LG2 aus ihrer Ruhelage in ihre Arbeitslage geschaltet, wodurch die Zeitmultiplex-Anschlußleitungen L1/1 bis L2/2 so umgeschaltet werden, daß sowohl das Koppelfeld K1 als auch dar Prozessor ZW1 durch das Koppelfeld K2 und den Prozessor ZW2 ersatzgeschaltet werden. Danach verlaufen alle Verbindungen über die jeweils anderen Anschlußgruppen, z. B. LTG 2, sowie über deren Teilkoppelfelder, z. B. GS2, sowie über das Koppelfeld K2. In dieser Betriebssituation verlaufen also Verbindungen, die über die Ausschlußeinrichtungen 1DIU1 bis 1DIUe durchgeschaltet sind, über die Arbeitsseiten der Umschalter 1d1 bis 1d4 und über das Teilkoppelfeld GS2.

Anschließend an die zuvor beschriebene Prozessor-Ersatzschaltung mit Umschaltung aller Verbindungen auf das andere zentrale Koppelfeld (z. B. K2) und jeweils auf die anderen Teilkoppelfelder (z. B. GS2) nimmt der betreffende Prozessor (z. B. ZW2) die oben bereits erwähnte Neu-Ladung derjenigen dezentralen Steuerwerke (z. B. GP1) vor, die durch diese Umschaltung aus dem Vermittlungsbetrieb gerade herausgenommen worden waren. Danach erfolgt erneut eine Umschaltung von Verbindungen in der beschriebenen Weise, d.h. eine verbindungsindividuelle Umschaltung der Internleitungen (z. B. Li11 bis Li14), für diejenigen Anschlußeinrichtungen (z. B. 1DIU1 bis 1DIU4), über die Verbindungen durchgeschaltet sind, die über das Teilkoppelfeld (z. B. GS2) der jeweils anderen Anschlußgruppe (z. B. LTG2) verlaufen. Diese Verbindungen werden dann also auf das Teilkoppelfeld (z.B. GS1) derjenigen Anschlußgruppe (z. B. LTG1) wieder zurück-umgeschaltet, zu der die zuvor genannten Anschlußeinrichtungen gehören.

Schließlich ist noch auf den Fall einzugehen, daß an die Anschlußeinrichtungen z. B. 1DIU1 außenseitig zur Verbindungsherstellung über andere Vermittlungsstellen PCM-Übertragungssysteme, z. B. mit je 24 oder je 30 Kanalpaaren angeschlossen sind, wovon immer je ein Kanalpaar zur Herstellung einer individuellen Verbindung belegbar ist. Bei solchen Übertragungssystemen dient je ein Kanalpaar in bekannter Weise zur Übermittlung von kanalindividueller Signalisierungsinformation. In diesem Zusammenhang ist durch die RECOMMENDATIONS G704 im Rot-Buch des CCITT, VIII. Plenary Assembly in Malaga-Torremolinos, 8.- 19. October 1984, Fascile III. 3, (Seiten 77 bis 79) durch das als CAS-Verfahren bekannte Signalisierungsverfahren vorgesehen, innerhalb eines jeden von einer kontinuierlichen Folge von Pulsrahmen laufend bit-Folgen von je 8 bit zu bilden, von denen jede als ein "Wort" bezeichnet wird. In jedem Pulsrahmen gibt es 32 Worte, von denen 30 Worte einzeln 30 Kanälen zugeordnet sind. Ein weiteres Wort pro Pulsrahmen dient zur Übermittlung von kanalindividueller Signalisierungsinformation und zwar immer ein Halbwort pro Kanal. Demgemäß sind immer 16 Pulsrahmen zu einem Überpulsrahmen zusammengefaßt, wodurch 32 Halbworte pro Überpulsrahmen zur Verfügung sind, von denen 30 Halbworte den 30 Kanälen fest zugeordnet sind zur Übermittlung von Signalisierungsinformation.

Die bisherige Beschreibung bezieht sich nun hauptsächlich auf die Herstellung von Verbindungen und zwar auf die Verbindung zwischen Teilnehmer und Teilnehmer. Bekanntlich aber ist jede solche Verbindung von verbindungsindividueller Signalisierungsinformation begleitet, wie der letzten Literaturstelle und auch der DE-OS 31 22 275 (VPA 81 P 6245) zu entnehmen ist. Es ist nun vorgesehen, in ähnlicher Weise, wie die Umschalter 1d1 bis 2d4 noch weitere, nur einmal (in 2DIU1) stellvertretend für alle Anschlußeinrichtungen in Fig. 2 dargestellte Signalisierungsumschalter (si) pro Anschlußeinrichtung vorzusehen, welche Signalisierungswege von jeder der Anschlußeinrichtungen (1DIU2) einer Anschlußgruppe (LTG2) zu deren dezentralem Steuerwerk (GP2) im Normalbetrieb (über sr) durchschalten, und die ähnlich wie die Umschalter 1d1 bis 2d4 verbindungsindividuell, d.h. in diesem Falle kanalindividuell umschaltbar sind, und zwar in entsprechender Weise wie die Umschalter 1d1 bis 2d4, um auf diese Weise zeitmultiplex-technisch die zu einer jeden Verbindung individuell zugehörige Signalisierungsinformation im Zuge eines Umleitungsvorganges während einer Umleitungsphase jeweils dem dezentralen Steuerwerk GP2 oder dem dezentralen Steuerwerk GP1 zuzuführen (über sa), bzw. um verbindungsindividuelle Signalisierungsinformation von dort in der jeweiligen Anschlußeinrichtung aufzunehmen. Diese Signalisierungsumschalter werden also zeitmultiplextechnisch durch die jeweils betreffende dezentrale Steuereinrichtung, z. B. GP1, in ihre (dargestellte) Ruhelage und in ihre Arbeitslage gesteuert, je nach dem, zu welcher der beiden beteiligten Steuereinrichtungen, z. B. GP1 bzw. GP2, das jeweilige Halbwort der betreffenden Signalisierungsinformation weiterzuleiten ist, was sich danach bestimmt, welcher der beiden Ausschlußgruppen, z. B. LTG1 oder LTG2, der entsprechende Kanal im Sinne der obigen Beschreibung steuerungstechnisch zugeordnet ist.

Gegenüber dem CAS-Verfahren ist durch die CCITT-Empfehlung Q.702 im gleichen Rot-Buch (Fascile VI. 7, Seite 17 ff) ein als CCS-Verfahren bekanntes Signalisierungsverfahren vorgeschlagen worden. Danach ist vorgesehen, von der starren Zuordnung von Signalisierungs-Halbworten zu durch Verbindungen belegbaren Kanälen abzuweichen und stattdessen Signalisierungs-Informationen größeren Umfangs zu bilden und die Zuordnung zu den betreffenden Kanälen mittels einer entsprechenden Adressierung zu bewerkstelligen. Unter Voraussetzung einer Anwendung dieses Signalisierungsprinzipes ist vorgesehen, zwei Anschlußgruppen so zu steuern, daß ihre dezentralen Steuereinrichtung dann, wenn sie eine Signalisierungsinformation für einen Kanal erhalten, der in der bereits beschriebenen Weise durch Umschaltung auch steuerungsmäßig der anderen Anschlußgruppe zugeordnet ist, die betreffende Signalisierungsinformation gemäß dieser Zuordnung an diese andere Anschlußgruppe weiterleiten (z. B. über den Weg GL 1/2 oder einen ählich von GP1 zu GP2 und umgekehrt verlaufenden Weg) und in dieser dann der betreffenden dezentralen Steuereinrichtung zur Weiterleitung und/oder zur weiteren Verarbeitung zuführen.

Bis hierher hat die Beschreibung die Umschaltevorgänge in ihrer verbindungsindividuellen Eigenschaft dargestellt, d.h. in der Funktionsweise, daß jede Verbindung je nach jeweils erreichtem Stadium des Verbindungsaufbau-Fortschrittes umgeschaltet wurde, sowie jeder freie der verbindungsindividuell belegbaren Verbindungswege; dabei ist immer davon ausgegangen, daß einerseits der zu einer Verbindung bzw. zu einem Verbindungsweg gehörende Nachrichtenweg (s.u.!), z.B. Sprechadern oder Nachrichtenkanal, und andererseits der zu ihm gehörende Signalisierungsweg (s.u.!), z.B. Signaladern (Raummultiplex-Vermittlungstechnik) oder verbindungsindividueller Signalisierungskanal, immer gleichzeitig umgeschaltet werden, was vorzugsweise zeitmultiplextechnisch zu realisieren ist. Danach erfolgt also gemäß dieser einen Varianten diese Umschaltung einzeln pro Verbindungsweg, z.B. pro verbindungsindividuell belegbaren PCM-Kanal, also gemeinsam für den zu dem jeweiligen Verbindungsweg gehörenden verbindungsindividuellen Nachrichtenweg plus Signalisierungsweg. Anschließend wird auf eine andere Variante eingegangen, die teils gleiche und teils abweichende Merkmale im Vergleich zu der bisher beschriebenen Varianten aufweist.

Ganz allgemein weisen also für individuelle Verbindungen bereitgestelle und demgemäß belegbare Verbindungswege jeweils einen verbindungsindividuellen Nachrichtenweg sowie einen verbindungsindividuellen Signalisierungsweg auf. Der verbindungsindividuelle Nachrichtenweg dient für die Übertragung von Sprachinformationen, Daten und dergleichen im Sinne der Teilnehmer, die hierfür entsprechende Verbindungen wählen, und die beabsichtigen, hierüber miteinander zu sprechen, Daten auszutauschen und dergleichen. Der jeweils zu einem verbindungsindividuellen Nachrichtenweg dieser Art einzeln zugehörige verbindungsindividuelle Signalisierungsweg dient für Schaltkennzeichen und deren Übertragung und Austausch in bekannter Weise für Zwecke des Verbindungsaufbaues, der Verbindungsaufrechterhaltung,sowie der Gebührenzählung und dergleichen. In konventionellen Fernsprechvermittlungsanlagen besteht der verbindungsindividuelle Nachrichtenweg aus den Sprechadern und der verbindungsindividuelle Signalisierungsweg aus Belegungsader und Signaladern für Vorwärtszeichen und Rückwärtszeichen (c-, d-, e- und f-Ader). Bei Fernmeldevermittlungsanlagen in Zeitmultiplextechnik werden Signalisierungsinformationen zur Übertragung und zum Austausch solcher Schaltkennzeichen in der zuvor bereits beschriebenen Weise nach den Prinzipien der CCITT-Empfehlungen übertragen.

Die zuvor angesprochene andere Variante sieht nun in ähnlicher Form wie die davor sehr detailliert beschriebene erste Variante vor, daß die von einer Anschlußeinrichtung innerhalb einer Anschlußgruppe zu einem Teilkoppelfeld führenden anschlußgruppeninternen Internleitungen Li11 bis Li24 ebenfalls zum Teilkoppelfeld der jeweiligen Partner-Anschlußgruppe umschaltbar sind. Dies gilt also ganz generell bezüglich beider beschriebener Varianten.

Weiterhin ist nun bei der angesprochenen anderen Varianten ebenso - wie bereits für die weiter oben detailliert erläuterte erste ("eine") Variante beschrieben - vorgesehen, daß in Vorbereitung auf eine mögliche Umschaltung der Internleitungen vom Teilkoppelfeld der einen Anschlußgruppe zum Teilkoppelfeld ihrer Partner-Anschlußgruppe generell jede der betreffenden beiden Steuereinrichtungen einerseits Verbindungsdaten, die bezüglich aller über ihr jeweiliges Teilkoppelfeld bestehender Nachrichtenweg-Teilverbindungen angeben, welcher außenseitige Teilkoppelfeldanschluß jeweils mit welchem innenseitigen Teilkoppelfeldanschluß verbunden ist, von sich über dezentrale Übertragungswege in jedem der Anschlußgruppen-Paare an die jeweils entsprechende Partner-Steuereinrichtung abgibt und andererseits anhand solcher empfangener Verbindungsdaten einzelne Nachrichtenweg-Teilverbindungen über das Teilkoppelfeld der eigenen Anschlußgruppe aufbaut. Dies geschieht in ganz ähnlicher Weise, wie dies bereits im Zusammenhang mit der obigen ersten Varianten beschrieben wurde. Diese Nachrichtenweg-Teilverbindungen werden also anhand von jeweils empfangenen Verbindungsdaten aufgebaut. Es wurde bereits darauf hingewiesen, daß für einen Austausch dieser Verbindungsdaten zwischen den Steuereinrichtungen eines Anschlußgruppen-Paares dezentrale Datenwege GL1/2 vorgesehen sind.

Die genannten Nachrichtenweg-Teilverbindungen, die aufgrund solcher empfangener Verbindungsdaten aufgebaut werden, werden zwischen den bereits erwähnten innenseitigen Teilkoppelfeldanschlüssen und außenseitigen Teilkoppelfeldanschlüssen aufgebaut (rechtsseitig von GS1 bzw. linksseitig davon). Hierbei handelt es sich dann im einzelnen um solche außenseitigen Teilkoppelfeldanschlüsse, mit denen die Internleitungen der jeweiligen Partner-Anschlußgruppe durch die Umschaltung verbindbar sind; ferner handelt es sich um solche innenseitige Teilkoppelfeldanschlüsse, mit denen durch diese Umschaltung die Internleitungen der jeweiligen Partner-Anschlußgruppe über die letztgenannten außenseitigen Teilkoppelfeldanschlüsse und Nachrichtenweg-Teilverbindungen zu verbinden sind. Bei diesen Nachrichtenweg-Teilverbindungen handelt es sich also um vorsorglich und vorbereitend hergestellte Verbindungen als möglicher Ersatz für bestehende bzw. im Aufbau befindliche Verbindungen in einem Teilkoppelfeld, wobei die betreffenden entsprechenden vorbereitend und vorsorglich hergestellten Nachrichtenweg-Teilverbindungen immer im Teilkoppelfeld der jeweiligen Partner-Anschlußgruppe aufgebaut werden.

Gemäß der angesprochenen anderen Varianten führen die Internleitungen Li11 bis Li24 ausdrücklich nur die bereits genannten Nachrichtenwege; die Internleitungen werden innerhalb einer Umleitungsphase sämtlich unverzüglich umgeschaltet, wofür ja die vorbereitend und vorsorglich (also vor Beginn einer Umleitungsphase) aufgebauten Nachrichtenweg-Teilverbindungen im Teilkoppelfeld der jeweiligen Partner-Anschlußgruppe bereits zur Verfügung stehen. Gemäß der angesprochenen anderen Varianten werden gegenüber der obigen ersten Varianten von den Signalisierungswegen, die in an sich bekannter Weise jeweils innerhalb jeder Anschlußgruppe zu ihrer Steuereinrichtung führen, nur die von denjenigen Verbindungswegen, die frei sind, bzw. frei werden, z. B. durch Verbindungsauslösung, gleichermaßen von der eigenen Steuereinrichtung zu der der Partner-Anschlußgruppe umgeschaltet. Dies geschieht mit Hilfe des bereits oben erwähnten Umschalters si. In gleicher Weise sind in allen Anschlußeinheiten solche Umschalter (nicht gezeigt) vorgesehen. Es wurde bereits ausgeführt, daß dieser Umschalter als elektronisch arbeitender Schalter ausgebildet ist und zeitmultiplextechnisch gesteuert wird. Über diesen Umschalter verlaufen also im Sinne der Zeitmultiplextechnik sämtliche verbindungsindividuellen und den verbindungsindividuell belegbaren Nachrichtenwegen zugeordneten Signalisierungswege der jeweiligen Anschlußeinrichtung. Dieser Umschalter wird zeitmultiplextechnisch so gesteuert, daß über ihn pro verbindungsindividuellen Kanal, also pro verbindungsindividuell belegbaren Nachrichtenweg die jeweils zugehörige Signalisierungsinformation vom und zum dezentralen Steuerwerk der eigenen Anschlußgruppe oder vom und zum dezentralen Steuerwerk der Partner-Anschlußgruppe weitergeleitet wird. Dieser Umschalter wird also zeitmultiplextechnisch so gesteuert, daß durch ihn dadurch bewirkt wird, daß von den Signalisierungswegen nur die von denjenigen verbindungsindividuell belegbaren Verbindungswegen umgeschaltet werden, die frei sind, bzw. frei werden, sowie - vorzugsweise - auch von denjenigen Verbindungswegen, über die Verbindungen zwischen Teilnehmern aufgrund Meldens des jeweils Gerufenen vollständig durchgeschaltet sind, sowie auch von den jenigen Verbindungswegen, bei denen die Verbindungsherstellungsvorgänge zwar abgewickelt sind, der jeweils Gerufene sich aber noch nicht gemeldet hat. Mit Beendigung der Umleitungsphase wird auch im Falle der angesprochenen anderen Varianten vorgesehen, daß zu diesem Zeitpunkt ggfs. noch im Aufbau befindliche Verbindungen ausgelöst werden.

Gemäß der angesprochenen anderen Varianten werden also die verbindungsindividuell belegbaren Nachrichtenwege anders gesteuert hinsichtlich der durchzuführenden Umschaltungsvorgänge und der dafür vorgesehenen Umschalter als die jeweils zugehörigen Signalisierungswege. Die Nachrichtenwege werden bei einer Umschaltung sämtlich sofort umgeschaltet. Die Signalisierungswege werden dagegen teilweise erst etwas später umgeschaltet unter Berücksichtigung von eventuell zur Zeit gerade laufenden Verbindungsherstellungsvorgängen. Hierzu wird der Umschalter si von der betreffenden dezentralen Steuereinrichtung zeitmultiplextechnisch so gesteuert, daß er immer in denjenigen Zeitlagen (oder Teilen von diesen) seine der dargestellten Ruhelage entgegengesetzte Arbeitslage einnimmt, die den Signalisierungskanal-Zeitlagen der Verbindungswege zeitlagenmäßig zugeordnet sind, über welche keine oder solche Verbindungen verlaufen, die durch Melden des jeweils gerufenen Teilnehmers vollständig von Teilnehmer zu Teilnehmer durchgeschaltet sind; hier können auch noch solche Verbindungen einbezogen werden, die sich in der Ruf-Phase (also zwischen Wahlende und Melden) befinden (s.o.!). Dieser Umschalter wird dagegen in seine (dargestellte) Ruhelage gesteuert in Signalisierungskanal-Zeitlagen von solchen Verbindungswegen, über die Verbindungen gerade im Aufbau sind. Die zeitmultiplextechnische Steuerung des Umschalters si in der Anschlußeinrichtung 2DIU1 der Anschlußgruppe LTG2 erfolgt von deren dezentraler Steuereinrichtung GP2 aus, mit der ja die über die Anschlußeinrichtungen 2DIU1 bis 2DIU4 dieser Anschlußgruppe bereits und noch im Aufbau befindlichen Verbindungen verbindungsaufbautechnisch vervollständigt werden. Es wäre aber auch möglich, den Umschalter si von der Steuereinrichtung der jeweiligen Partner-Anschlußgruppe aus zu steuern.

Auch im Falle der angesprochenen anderen Varianten ist vorgesehen, daß Internleitungen sowie deren Signalisierungswege von einer Anschlußgruppe zur anderen in der angegebenen Weise umschaltbar sind, daß anschließend vermittlungstechnische Informationen und/oder Programminformationen zur Steuereinrichtung der einen Anschlußgruppe übertragen und hier gespeichert werden, daß danach die Internleitungen sowie Signalisierungswege beider Anschlußgruppen von der anderen Anschlußgruppe zur der einen Anschlußgruppe in der angegebenen Weise umschaltbar sind, daß dann vermittlungstechnische Informationen und/oder Programminformationen zur Steuereinrichtung der anderen Anschlußgruppe übertragen werden, und daß hierauf die Internleitungen sowie deren Signalwege der einen Anschlußgruppe von der anderen Anschlußgruppe wieder zu der einen Anschlußgruppe in der angegebenen Weise zurückumgeschaltet werden.

Hiernach besteht also die Möglichkeit, auch im Falle der angesprochenen anderen Varianten die Neuladung der dezentralen Steuereinrichtungen mit vermittlungstechnischen Informationen und/oder Programminformationen vom Zentralprozessor her abzuwickeln.

Es ist noch ein weiterer Umschalter (sd) zu erwähnen. Er wird ebenfalls zeitmultiplextechnisch gesteuert. In seiner dargestellten Ruhelage ist über ihn der PCM-Übertragungsweg 2u1 zum dezentralen Steuerwerk GP2 hin verbunden; dagegen ist er in seiner Arbeitslage mit dem Umschalter 2d1 verbunden. Wie an sich bekannt, umfaßt ein PCM-System (2u1) sowohl als verbindungsindividuell belegbare Nachrichtenwege vorgesehene Nachrichtenkanäle als auch einen denselben gemeinsamen Signalisierungskanal; in diesem ist eine Übertragung von Halbworten vorgesehen, die im Überpulsrahmen zeitlagenmäßig den Nachrichtenkanälen einzeln fest zugeordnet sind. Nach Maßgabe dieser Zeitlagenzuordnung in den Pulsrahmen und in den Überpulsrahmen - und zwar sowohl der Nachrichtenkanäle als auch der Signalisierungskanal-Halbworte jeweils zu diesen Rahmen - erfolgt die beschriebene zeitmultiplextechnische Steuerung des Umschalters sd. Entsprechende Umschalter (also entsprechend wie si und sd) sind in ebenso auch in den anderen Anschlußeinrichtungen dieser sowie aller anderen Anschlußgruppen vorgesehen.

## Patentansprüche

1. Verfahren zur Umschaltung einer Anschlußgruppe auf eine Partneranschlußgruppe in Fernmeldevermittlungsanlagen,
in denen ein zur Herstellung von Verbindungen dienendes zentrales Koppelfeld (K) vorgesehen ist,
in denen eine Mehrzahl von dezentralen Anschlußgruppen (LTG) vorgesehen sind, mit jeweils mehreren Anschlußeinheiten (DIU) zum außenseitigen Anschluß von Verbindungs- und/oder Teilnehmerleitungen, mit jeweils einem Teilkoppelfeld (GS) zur Herstellung von (Teil-) Verbindungen und mit jeweils einer dezentralen Steuereinrichtung (GP) zur Steuerung der Anschlußeinheiten und des Teilkoppelfeldes,
in denen die genannten Anschlußeinheiten Umschalter (1d1,...,2d4) enthalten, mit Hilfe derer die Nachrichten- und Signalisierungskanäle belegenden Verbindungen einer Anschlußgruppe auf die Partner-Anschlußgruppe umschaltbar sind,
**dadurch gekennzeichnet,**
daß sämtliche Nachrichtenkanäle bereits zu Beginn der Umschaltephase gemeinsam umgeschaltet werden,
Signalisierungskanäle, die nicht belegt sind oder für stabile Verbindungen belegt sind, ebenfalls bereits zu Beginn der Umschaltephase umgeschaltet werden,
Signalisierungskanäle, die durch sich im Aufbau befindliche, sogenannte transiente Verbindungen belegt sind, erst dann umgeschaltet werden, wenn diese transienten Verbindungen in einen vermittlungstechnisch stabilen Zustand übergegangen sind.

2. Verfahren nach Anspruch 1,
**dadurch gekennzeichnet,**
daß Nachrichtenkanäle sowie deren Signalisierungskanäle von einer Anschlußgruppe zur anderen in der angegebenen Weise umschaltbar sind, daß anschließend vermittlungstechnische Informationen und/oder Programminformationen zur Steuereinrichtung der einen Anschlußgruppe übertragen und hier gespeichert werden, daß danach die Nachrichtenkanäle sowie Signalisierungskanäle beider Anschlußgruppen von der anderen Anschlußgruppe zur der einen Anschlußgruppe in der angegebenen Weise umschaltbar sind, daß dann vermittlungstechnische Informationen und/oder Programminformationen zur Steuereinrichtung der anderen Anschlußgruppe übertragen werden, und daß hierauf die Nachrichtenkanäle sowie Signalisierungskanäle der einen Anschlußgruppe von der anderen Anschlußgruppe wieder zu der einen Anschlußgruppe in der angegebenen Weise zurückumgeschaltet werden.

3. Verfahren nach Anspruch 1,
**dadurch gekennzeichnet,**
daß innerhalb der Umschaltephase auch die Signalisierungskanäle von denjenigen Verbindungen umgeschaltet werden, bei denen die Verbindungsherstellungsvorgänge zwar abgewickelt sind, der jeweils gerufene Teilnehmer sich aber noch nicht gemeldet hat.

4. Verfahren nach Anspruch 1,
**dadurch gekennzeichnet,**
daß mit Beendigung der Umschaltephase die zu diesem Zeitpunkt noch im Aufbau befindlichen Verbindungen ausgelöst werden.

## Claims

1. Method for switching a line/trunk group over to a partner line/trunk group in telecommunication exchanges in which a central switching network (K) serving to set up connections is provided, in which a plurality of decentral line/trunk groups (LTG) are provided, having in each case a plurality of line/trunk units (DIU) for the external connection of trunk lines and/or subscriber lines having in each case a partial switching network (GS) for setting up (partial) connections and have in each case a decentral control device (GP) for controlling the line/trunk units and the partial switching network, in which the said line/trunk units contain changeover switches (1d1,...,2d4) with the aid of which the connections of a line/trunk group which occupy the message and signal channels can be switched over to the partner line/trunk group, characterised in that all the message channels are switched over jointly right at the start of the changeover phase, signal channels which are not occupied or are occupied for stable connections are likewise switched over right at the start of the changeover phase, and signal channels which are occupied by connections that are being set up, so-called transient connections, are not switched over until these transient connections have undergone transition to a state that is stable in terms of switching technology.

2. The method according to Claim 1, characterised in that message channels and their signals channels can be switched over from one line/trunk group to the other in the specified way, in that subsequently switching-related information and/or program information is transmitted to the control device of one line/trunk group and stored there, in that thereafter the message channels and signal channels of both line/trunk groups can be switched from the other line/trunk group to the one line/trunk group in the specified way, in that then information relating to switching technology and/or program information is transmitted to the control device of the other line/trunk group, and in that the message channels and signal channels of the one line/trunk group are then switched over once again in the specified way from the line/trunk group back to the one line/trunk group.

3. Method according to Claim 1, characterised in that within the changeover phase the signal channels are also switched over from those connections in which although the connection set-up processes are completed the particular called subscriber has not as yet answered.

4. Method according to Claim 1, characterised in that with the completion of the changeover phase, the connections still being set up at this point in time are released.

## Revendications

1. Procédé pour commuter un groupe de raccordement à un groupe de raccordement correspondant dans des installations de commutation de télécommunications, dans lesquelles
il est prévu un champ de couplage central (K) utilisé pour l'établissement de liaisons,
il est prévu une multiplicité de groupes de raccordement décentralisés (LTG) comportant respectivement plusieurs unités de raccordement (DIU) pour le raccordement, côté extérieur, de lignes de jonction et/ou de lignes d'abonnés, avec respectivement un champ de couplage partiel (GS) pour établir des liaisons (partielles) et respectivement un dispositif de commande décentralisé (GP) pour commander les unités de raccordement et le champ de couplage partiel, et
lesdites unités de raccordement comportent des commutateurs (1d1, ..., 2d4), à l'aide desquels les liaisons qui occupent les canaux de transmission d'informations et de signalisation d'un groupe de raccordement, peuvent être commutées sur le groupe de raccordement correspondant,
caractérisé par le fait
que tous les canaux de transmission d'informations sont commutés en commun déjà au début de la phase de commutation, des canaux de signalisation, qui ne sont pas occupés ou sont occupés pour des liaisons stables, sont également commutés déjà au début de la phase de commutation,
des canaux de signalisation qui sont occupés par des liaisons en cours d'établissement, et qu'on appelle des liaisons transitoires, ne sont commutés que lorsque ces liaisons transitoires passent à un état stable du point de vue de la technique de commutation.

2. Procédé suivant la revendication 1, caractérisé par le fait
que des canaux de transmission d'informations ainsi que leurs canaux de signalisation peuvent être commutés d'un groupe de raccordement à un autre, de la manière indiquée, qu'ensuite des informations techniques de commutation et/ou des informations de programme sont transmises au dispositif de commande d'un groupe de raccordement et y sont mémorisées, qu'ensuite les canaux de transmission d'informations ainsi que les canaux de signalisation des deux groupes de raccordement peuvent être commutés de la manière indiquée depuis l'autre groupe de raccordement au premier groupe de raccordement, qu'ensuite des informations techniques de commutation et/ou des informations de programme sont transmises au dispositif de commande de l'autre groupe de raccordement, et qu'ensuite, les canaux de transmission d'informations ainsi que les canaux de signalisation du premier groupe sont commutés en retour, depuis l'autre groupe de raccordement, à nouveau au premier groupe de raccordement de la manière indiquée.

3. Procédé suivant la revendication 1, caractérisé par le fait
qu'au cours de la phase de commutation, il se produit également une commutation des canaux de signalisation des liaisons, dont les processus d'établissement sont terminés, mais qui n'ont pas été encore signalés à l'abonné respectivement appelé.

4. Procédé suivant la revendication 1, caractérisé par le fait
qu'à la fin de la phase de commutation, les liaisons encore en cours d'établissement à cet instant, sont supprimées.
